# EUROPEAN PATENT SPECIFICATION

(11) **EP 4 460 264 B1**
(45) Date of publication and mention of the grant of the patent: **31.12.2025**
(21) Application number: 22789535.6
(22) Date of filing: 16.09.2022
(51) Int. Cl.: A61C 19/06, A61C 5/62

(54) **DISPENSER**
SPENDER
DISTRIBUTEUR

(30) Priority: 24.03.2022 EP 22164210; 08.04.2022 EP 22167336; 10.05.2022 WO PCT/EP2022/062697
(43) Date of publication of application: 13.11.2024
(73) Proprietor: medmix Switzerland AG, 9469 Haag (Rheintal) (CH)
(72) Inventor: MUELLER, Frank, 6800 Feldkirch (AT); NAGARAJA, Dilip Kumar, Bengaluru, Karnataka 562106 (IN)
(74) Representative: Manitz Finsterwald Patent- und Rechtsanwaltspartnerschaft mbB
(86) International application number: PCT/EP2022/075775
(87) International publication number: WO 2023/179894

(56) References cited:
- US-A1- 2007 012 376
- US-A1- 2020 188 075

## Description

The present invention relates to a dispenser for dispensing 1K materials, the dispenser comprising a housing, one or more nozzles for dispensing a 1K material and attached to the housing, one or more reservoirs for storing a respective 1K material arranged within a housing of the dispenser, one or more material driving assemblies configured to act on a respective one of the one or more reservoirs to drive the respective 1K Material out of respective one of the one or more nozzles, with the one or more material driving assemblies at least partly being arranged within the housing.

Applicators are well known, particularly in the dental and medical field for treating e.g. a patient's gums, a patient's teeth, spaces between the teeth or the like. The applicators can be used to apply fluids, such as cremes, medicinal fluids, etching materials, adhesives, ointments and the like to parts of a patient's mouth or body. An exemplary hand-held oral care implement is disclosed in US 2020/0188075 A1. Furthermore, US 2007/0012376 A1 discloses an apparatus for dispensing a plurality of fluids.

For carrying out the various tasks, the applicators generally have an application tip that is configured to carry out the precise application. For example, brushes are known for cleaning between a patient's teeth, also foams are also known for applying a dental or medical fluid at an area of the mouth including the teeth. Moreover, cannulas are known for applying 1K material at teeth. Particularly with regard to hard to reach areas of the mouth it is desirable to provide an applicator that can be deformed for the specific application and that reliably maintains its shape after deformation.

In order to apply the 1K material to a patient's mouth via the applicator, the 1K material has to be made available at the applicator. Dispensers are known for this purpose. Typically dispensers are formed as disposable devices that are discarded once the material stored therein has been dispensed. Moreover, it is not recognisable how much material is still present in these dispensers. It is also the case that the dispensers are not typically designed for single handed use which makes the task of the dental professional or medical professional using the dispenser more arduous.

It is therefore an object of the invention to make available a re-usable dispenser in which waste and in particular plastic waste can be significantly reduced and which is preferably capable of providing pre-determined doses of 1K material. It is a further object of the invention to provide a dispenser that is simple to use and preferably simple to clean and disinfect that optionally provides feedback to a user thereof of the state of use of the dispenser.

This object is satisfied by a dispenser in accordance with claim 1.

Such a dispenser, e.g. a dental dispenser, for dispensing 1K materials, in particular 1K dental materials, comprises a housing, one or more nozzles for dispensing one or more respective 1K materials, the one or more nozzles being attached to the housing, one or more reservoirs for storing the respective 1K material, the one or more reservoirs being arranged within the housing of the dispenser,
one or more material driving assemblies configured to act on a respective one of the one or more reservoirs to drive the respective 1K Material through a respective one of the one or more nozzles, with the one or more material driving assemblies at least partly being arranged within the housing.

In this way an easy to handle and dosable dispenser is made available. The dispenser is preferably also self-explanatory to a user thereof and capable of enabling one handed use for efficiency of dispensing of materials.

The one or more nozzles may comprise at least one of a canula, an applicator, e.g. a brush, micro brush etc., an outlet for e.g. dispensing predefined volumes of 1K Material, e.g. in the form of drops, and combinations of the foregoing. In this way the 1K material can be applied and/or dispensed in a simple manner.

The nozzle may be one of a nozzle repeatedly detachable to and from the dispenser, e.g. via first and second connections means and a nozzle fixed to the dispenser. By providing replacable nozzles, different nozzles can be attached as applicators to enable different use cases, e.g. for the treatment of bigger and smaller cavities.

Selecting e.g. a thread or a Luer lock as the first and second connection means enables a fast, simple and efficient means of replacing the nozzle.

The one or more material driving assemblies may comprise one or more members selected from the group of members comprising a plunger, a driver, e.g. a mechanical drive, an electric drive, a pressurized gas drive, one or more pumps, one or more valves, one or more piezo elements and combinations of the foregoing. Such components enable the precise dosing of materials to be dispensed.

The dispenser may further comprise a sensor assembly for sensing an applicator in the proximity of one of the one or more nozzles; and/or for sensing one or more parameters of the dispenser and/or of the environment of use of the dispenser. Using such sensor assemblies e.g. to initiate the dispensing of materials enables a fast, simple and efficient way of using the dispenser. Such sensor assemblies may comprise RFID technology, magnetic sensor assemblies, bar codes, QR codes, light barriers or the like. In this connection the sensors may be pressure sensors, temperature sensors, position sensors and/or proximity sensors or the like.

If a dispenser with several nozzles is provided that supply several kinds of 1K material, the nozzle of a specific kind of 1K material can be activated if a user brings a specific kind of applicator, e.g. having a specific RFID code, magnetic coding etc. into the proximity of the nozzle without having to press any buttons for ease of use of the dispenser.

The sensor assembly may comprise a position resolving sensor and/or several individual sensors, with areas of the position resolving sensor and/or the individual sensors of the sensor assembly then optionally being associated with a respective one of the one or more nozzles. If a dispenser with several nozzles is provided that supply several kinds of 1K material, the nozzle of a specific kind of 1K material can be activated if a user brings an applicator into the proximity of the nozzle without having to press any buttons for ease of use of the dispenser.

The dispenser may further comprise a control unit arranged within the housing, the control unit being configured to initiate an activation of the one or more material driving assemblies to act on one of the one or more reservoirs to dispense the respective 1K material via said one of the one or more nozzles. In this way the digital information obtained by the sensor assembly can be processed in a fast and efficient way to dispense the desired 1K material.

The control unit may further be configured to sense the presence of an applicator in the region of one of the one or more nozzles, i.e. the control unit may be able to sense the actuation of e.g. an actuator associated with the dispenser or the presence of an applicator in the proximity of the dispenser. In this way an easy to handle and dosable dispenser is made available. The dispenser is preferably also self-explanatory to a user thereof and capable of enabling one handed use for efficiency of dispensing of materials.

In this connection it should be noted that the control unit may be configured to process signals detected by sensors associated with the dispenser. Such sensors may comprise pressure sensors, temperature sensors, position sensors and/or the sensor assembly.

The control unit can process the information conveyed by the signal and obtained by these sensors to alert a user of the dispenser that e.g. that a dispensing speed needs adjusting, that a 1K material stored in a respective reservoir is running low, that a temperature of the respective 1K material is too high or too low, that a component of the material driving assemblies is at a wrong position, that an applicator is in the proximity of the dispenser etc.

The control unit may further be configured to sense the presence of an applicator in the region of one of the one or more nozzles on the basis of signals transmitted from the sensor assembly to the control unit. In this way no specific code has to be present at the applicator and the dispenser merely detects an object in the proximity of a nozzle and recognizes this object as the desired applicator for ease of use.

A dosing of the 1K material may be made available by sensing the time the applicator is present at the dispenser and dispensing material for this period of time.

The dispenser may further comprise an activator, such as a button or lever, the activator then optionally being associated with a respective one of the one or more nozzles for activating one of the one or more material driving assemblies to dispense 1 k material via said one of the one or more nozzles. By providing e.g. a button at a pen-type dispenser the user can simply press the button and therby to initiate the supply of the 1K material to the nozzle for applying the desired 1K material.

The reservoir may be arranged in a chamber of the dispenser, optionally wherein the chamber may be arranged within a cover of the dispenser, optionally wherein the dispenser may further comprise a passage connecting the respective one of the one or more nozzles with a respective chamber.

In this way a simple to manufacture construction of a dispenser is made available in which a contact of the 1K material stored within the reservoir to other components of the dispenser are minimized.

The dispenser may be a pen-type dispenser, and preferably is a reusable pen-type dispenser. Such dispensers are simple to use and preferably with one hand.

In this connection it should be noted that such pen-type dispensers can be provided as an accessory to a dentist chair, with the supply of energy, pressurized air etc. then being provided via a respective interface between the pen-type dispenser and the dentists' chair.

In this connection it should be noted that the pen-type dispenser may be equipped with a window for monitoring the state of use of a container installed therein. In this connection it should be noted that also different kinds of level indicators could be made available to indicate the state of use of a container installed in the dispenser.

It should further be noted that through the appropriate selection of the material driving assemblies, e.g. using an electric motor a stepwise application of the 1K material can be made available, e.g. a dosing function can be made available.

In this connection it should be noted that such a dosing function may also be made available by a valve arranged at the dispenser, with the valve permitting a certain amount of material to pass within a pre-defined unit of time.

Moreover, such a pen-type applicator enables one handed use during application so that a dental professional or the like can hold a mirror or a further applicator in their other hand while using the dispenser.

It should further be noted that such a dispenser is simple to clean and disinfect e.g. it can be autoclavable in apparatus already present in a dental or medical practice.

Such a pen-type dispenser can be used with a variety of applicators connectable thereto for different uses, with only the applicator and the cartridge then having to be replaced between used of the dispenser rather than the complete dispenser as is the case in the prior art.

In this connection it should also be noted that at least one of the reservoir, a cartridge, the dispenser, the applicator the nozzle and combinations of the foregoing may be provided with coding means. Such coding means ensure that the correct type of material is used with the correct type of dispenser and the correct type of applicator.

In this connection it should be noted that the pen-type dispenser and the associated containers may be color coded or coded in another way in order to ensure that the correct containers are inserted into the correct pen-type dispenser. By way of example, the following colors can be used for the color coding, yellow, green, blue, teal, purple, pink, red and brown. By way of example, a yellow color code is used for etching agents, a green color code is used for adhesives, a blue color code is used for topical medications, a teal color code is used for a whitening agent, a green color code is used for flurinizing agents, a purple color code is used for cremes, a pink color code is used for medicinal fluids, a brown color code is used for ointments etc.

In this connection it should be noted that the replacable nozzles may also be color coded for the different types of applications, e.g. a micro brush may be coded with the color blue for application of topical medications, a green color code may be provided for use with foams for applying fluorine comprising agents etc.

The dispenser may be a dispensing station, such as a dispensing station configured to be installed at a dental unit, i.e. a dentists' chair. In this connection the dispenser may comprise a plurality of nozzles for different materials. By way of example the dispenser may comprise between one, two, three, four and eight different nozzles for different kinds of 1K materials, with respective reservoirs and material driving assemblies likewise being provided.

In this connection it should be noted that the color coding mentioned in the foregoing may be used also for the dispensing stations. It should also be noted that the applicator associated with a respective nozzle and 1K material may also be color coded so that the dental or medical professional knows that e.g. a micro-brush applicator intended to apply topical medications may be color coded in blue and the nozzle of the dispenser is then likewise color coded in blue etc.

In use the dispenser is simple to use as a dental or medical professional simply has to hold the applicator beneath a nozzle of the dispenser in order to retrieve a 1K material.

In this way also a contact of the applicator with the dispenser is avoided, such that the dispenser can be cleaned in a fast and efficient manner, e.g. by simply using a disinfectant wipe between uses negating the use of an autoclave on a regular basis.

The housing of the dispenser may comprise a lid as the cover pivotable relative to a base of the housing to enable access to chambers for storing the reservoirs. The provision of a lid as a cover enables a reservoir to be refilled in a simple and efficient manner with a fresh container once a material stored therein has been dispensed.

The control unit may be configured to control and/or to regulate at least one of the material driving assemblies, the one or more nozzles the driver, the one or more pumps, the one or more valves, the one or more piezo elements, parameters relating to the foregoing and combinations of the foregoing. In this way the correct amount of 1K material can be dispensed in a controlled and/or regulated manner in order to avoid excessive use of materials that then have to be discarded.

The one or more reservoirs may each be filled with a dental 1K material, such as an adhesive, an etching agent, a cleaning agent, a whitening agent, a topical agent, medicinal fluids, cremes, ointments etc. Such materials are typically found in a dental or medical practice and used by the corresponding dental or medical professional in the treatment of patients.

At least one of the one or more reservoirs may be formed by a replacable container, such as a sachet, a cartridge, and a barrel.

In this connection the replacable container can be inserted into the dispenser via the lid, at the middle of the dispenser between a proximal and a distal end of the dispenser, either from above into a top side of the dispenser (the side at which the button is arranged) or from the side, i.e. a side directly adjacent to the top side, via a slider or flap. Alternatively the cartridge can be inserted between the middle and the distal end in a manner similar to a fountain pen. Further alternatively the cartridge can be inserted via the proximal end.

Such replacable containers simplify the use of the dispenser. In this way the dispenser can be refilled in a fast, facile and cost effective manner.

The dispenser may comprise a filling level indicator. Such an indicator can indicate a continuous change in the filling level e.g. using a scale present at e.g. a window of the dispenser, with the window showing the reservoir, or by sensing the amount of material left using a sensor and then transmitting a visible or audible signal via the control unit to the user of the dispenser.

The dispenser may comprise a cartridge. This cartridge can be replaceable making the pen more versatile in use.

The cartridge may be stored in a cartridge holder. In this way an as compact as possible assembly can be realised.

The cartridge holder may be releasably held at an actuator housing. In this way the cartridge holder or the cartridge stored therein can be replaced in simple manner once the material stored in the cartridge has run out or past its shelf life.

The dispenser may further comprise a piston rod. Such a piston rod is a simple to utilize component of the material driving assembly.

The piston rod may be held in a non-rotating manner in the actuator housing relative to further component of the dispenser during dispensing.

The piston rod may have a non-circular cross-section. In this way a rotation of the piston rod can be inhibited more easily simply by forming a corresponding part with a complementary shaped cross-section.

The piston rod may be axially moveable relative to the dispenser in the dispensing position. In this way the piston rod can drive the material out of the dispenser by moving relative to the dispenser.

The piston rod may be axially moveable towards and into the cartridge. In this way an as compact as possible design can be realised.

The piston rod may be guided in a ratchet cage. Such an actuation mechanism can be formed in an as compact as possible manner.

The ratchet cage may be biased with respect to the actuator housing. This leads to beneficial dispensing results.

The ratchet cage may be biased with respect to the cartridge and/or the cartridge holder. In this way the ratchet cage may only be engaged if the cartridge and/or the cartridge holder are attached at the dispenser.

The dispenser may further comprise a ratchet cylinder. This can advantageously be used as a part to drive the material driving cylinder once the button has been pressed.

The ratchet cylinder may be configured to engage the ratchet cage. In this way a swift and simple transfer of sliding motion into rotational movement.

At least one of the ratchet cage and the ratchet cylinder may comprise one or more projections that engage one or more recesses present at at least one of the ratchet cage and the ratchet cylinder. In this way the two components can be configured to engage one another in an as simple as possible a manner.

The dispenser may further comprise a rotatable body. Such a body can be used in low cost and simple to manufactures pen.like dispensers.

The rotatable body can be rotated relative to the piston rod. In this way a rotation of the rotatably body relative to the rotation of the piston rod can define a gearing present.

A rotation of the rotatable body may brought about by pressing an actuator of said dispenser. This enables a simple to manufacture dispenser.

The actuator may be configured to engage a cam. The cam can be displaced linearly for dispensing material from the dispenser.

The actuator may be configured to deflect the cam along the longitudinal axis. This aids in bringing about the movement in parallel to the longitudinal axis.

An engagement respectively a deflection of the cam may bring about a rotation of the rotatable body.

The cartridge holder may be configured to receive a cannula. In this way different cannulas can be attached between different patients and/or different treatments of one and the same patient.

The cartridge holder may have a click notch system for attachment to the actuator housing. In this way an audible feedback can be provided to the user of the dispenser on a correct attachment of the cartridge holder at the dispenser.

The cartridge holder may have a quarter turn coupling optionally with double start thread for attachment to the actuator housing. Such a coupling can be attached in a similar and reliable manner.

The dispenser according to the invention further comprises a resetting mechanism. In this way e.g. the piston can be reset into a starting position so that a fresh cartridge or cartridge holder can be attached to the dispenser.

The resetting mechanism may be formed between the ratchet cage and the ratchet cylinder. In this way a compact and simply assembly can be realized
The resetting mechanism may further comprise one or more springs. Such springs can be used to bias parts into and out of engagement with respect to one another.

The resetting mechanism of the dispenser according to the invention is configured to rotate relative to the housing when no dispensing unit is attached to the housing and to thereby move the piston rod in a distal direction back into the housing. In this way the piston rod can be reset by simply turning it back into the housing on replacement of the cartridge holder with fresh material to be dispensed.

The resetting mechanism may be configured to be pushed axially in the distal direction along the longitudinal axis by the cartridge holder when the cartridge holder is being mounted to the housing and to thereby become rotationally locked with respect to the housing. In this way the resetting mechanism can be used to lock the piston rod in such a way that it cannot be rotated relative to the housing with a mounted cartridge holder, but allow the piston rod to be rotated relative to the housing for resetting.

The resetting mechanism may be configured to be directly contacted and pressed axially by the cartridge holder upon mounting the dispensing unit to the housing. In this way the component that is added and/or removed can be used to bias the resetting element between the resetting position and a mounted position.

The cartridge holder may be integrally formed with the cartridge or may be configured to receive a separate cartridge. In this way an as compact a design as possible can be achieved. In this connection it should be noted that it is preferred if the cartridge holder is mounted flush with the housing of the dispenser so that the tactile handling of the dispenser can be improved.

The piston rod may be rotationally fixed to the resetting mechanism and free to move in an axial direction of the dispenser with respect to the resetting mechanism. In this way the piston rod is free to rotate for the purpose of resetting and can be fixed axially for the purpose of dispensing.

The resetting mechanism may be configured to be moved along the axial direction of the dispenser when the cartridge holder is being attached to the housing of the dispenser until the resetting mechanism touches a coupling site of the housing where the resetting mechanism is rotationally fixed with respect to the housing. This further improves the transition between rotatable and non-rotatable piston rod for the different states of use.

The resetting mechanism may comprise a first set of engagement features, for example teeth, with which the resetting mechanism is rotationally fixed to the housing when the dispensing unit is attached to the housing, and wherein the housing may comprise a second set of engagement features, for example teeth, for example at said coupling site, which corresponds to the first set of engagement features of the resetting mechanism such that said first and second set of engagement features engage with each other to rotationally fix the resetting mechanism with respect to the housing when the dispensing unit is attached to the housing. This further improves the transition between rotatable and non-rotatable piston rod for the different states of use.

The dispenser may further comprising a biasing element, such as a compression spring, e.g. a ratchet spring, that biases the resetting mechanism in the proximal direction. This further improves the transition between rotatable and non-rotatable piston rod for the different states of use.

The dispenser may further comprise a clamping mechanism configured to clamp the piston rod. The clamping mechanism can be a part of the resetting mechanism and be used to reset the dispenser after a cartridge his replaced.

The clamping mechanism may be arranged at the ratchet cage. In this way an as compact a design as possible can be achieved that is simple to use.

A part of the clamping mechanism may be integrally formed with the ratchet cage. In this way a more reliable clamping mechanism can be formed in an as compact a design as possible.

The clamping mechanism may comprise two or more parts. In this way the clamping effect can be increased.

The two or more parts may comprise an upper cage element, a lower cage element, a fixed cage element, a rotatable cage element and one or more springs. Such components can advantageously be used in the clamping mechanism to form an as compact a design as possible.

The one or more springs may be configured to urge the upper cage element and the lower cage element into engagement with the piston rod. In this way the clamping engagement can be reliably ensured through the use of biasing elements.

The upper cage element and the lower cage element may be configured for a symmetrical engagement of the piston rod. By applying a symmetric clamping force at the piston rod, this can be reliably held during a dispensing operation.

The clamping mechanism may be configured to clamp the piston rod during dose dispensing and to be released during resetting of the dispenser. IN this way one can ensure an accurate dosing on using the dispenser, as the piston rod is fixed in its position during dispensing.

The piston rod may have a non-circular outer cross-section and the clamping mechanism may have a cross-section shaped complementary to the non-circular piston rod, in particular in the form of an elongate slot. In this way one can further enhance the clamping effect and avoid rotation of the piston rod during the dispensing process.

The piston rod may be configured to be rotated relative to the clamping mechanism for resetting. For example, the piston rod can be rotated by an angle selected in the range of 30 to 120°, preferably in the range of 45 to 105° relative to the clamping mechanism for resetting. In this way the outer circumference of the piston rod can be aligned with the clamping mechanism to permit movement of the piston rod relative to the clamping mechanism for resetting purposes.

Additionally or alternatively one or more parts of the clamping mechanism can be rotated relative to the remaining parts of the clamping mechanism. For example, the one or more parts of the clamping mechanism that can be rotated relative to the remaining parts of the clamping mechanism can be rotated by an angle selected in the range of 30 to 120°, preferably in the range of 45 to 105° relative to the remaining parts of the clamping mechanism for resetting. In this way the outer circumference of the piston rod can be aligned with the clamping mechanism to permit movement of the piston rod relative to the clamping mechanism for resetting purposes.

One or more parts of the clamping mechanism may comprise an elongate hole. Such an elongate hole is comparatively simple to manufacture and can be used with a complementary shaped piston rod.

One or more parts of the clamping mechanism may be configured to slide relative to the remaining parts of the clamping mechanism. The clamping action of the clamping mechanism can thus be initiated by a sliding movement.

According to a further aspect this object is satisfied by a method of preparing a dental dispenser, the method comprising the steps of:
providing a dispenser having a filling indicator,
inserting a container into the dispenser,
monitoring the amount of material stored in the dispenser, and optionally dispensing material stored in the dispenser following activation of the dispenser via an activator thereof.

In this way a dispenser can be made available that is prepared for use in a fast, facile and cost effective manner.

Further embodiments of the invention are described in the following description of the figures and/or the dependent claims attached to this specification. The invention will be explained in the following in detail by means of embodiments and with reference to the drawing in which is shown:
- Fig. 1: a perspective view of first kind of pen-type dispenser and replacable containers and hubs with various applicators;
- Fig. 2: a perspective view of second kind of pen-type dispenser;
- Fig. 3: a perspective view of a first kind of dispensing station and of an associated applicator;
- Fig. 4: a side view of the dispensing station of Fig. 3;
- Fig. 5: a block diagram showing components of a dispenser;
- Fig. 6: a block diagram showing components of a further dispenser;
- Fig. 7: a block diagram showing electronic components of a dispenser;
- Fig. 8: a block diagram showing electronic components of a further dispenser;
- Fig. 9: a perspective view of a second kind of dispensing station and of an associated applicator;
- Fig. 10: a view of components of a further kind of pen-type dispenser;
- Fig. 11: a view of components of yet a further kind of pen-type dispenser;
- Fig. 12: a view of components of yet a further kind of pen-type dispenser;
- Fig. 13a to i: various views of components of a further kind of pen-type dispenser;
- Fig. 14a to e: various views of components of yet a further kind of pen-type dispenser;
- Fig. 15a to c: various views of different kinds of a clamping mechanism;
- Fig. 16: a view of a kind of pen-type dispenser as described in connection with Fig. 10 having a clamping mechanism arranged therein;
- Fig. 17: a view of a kind of pen-type dispenser as described in connection with Fig. 11 having a clamping mechanism arranged therein;
- Fig. 18: a view of a kind of pen-type dispenser as described in connection with Fig. 12 having a clamping mechanism arranged therein; and
- Fig. 19: a view of components of a further kind of pen-type dispenser.

In the following the same reference numerals will be used for parts having the same or equivalent function. Any statements made having regard to the direction of a component are made relative to the position shown in the drawing and can naturally vary in the actual position of application.

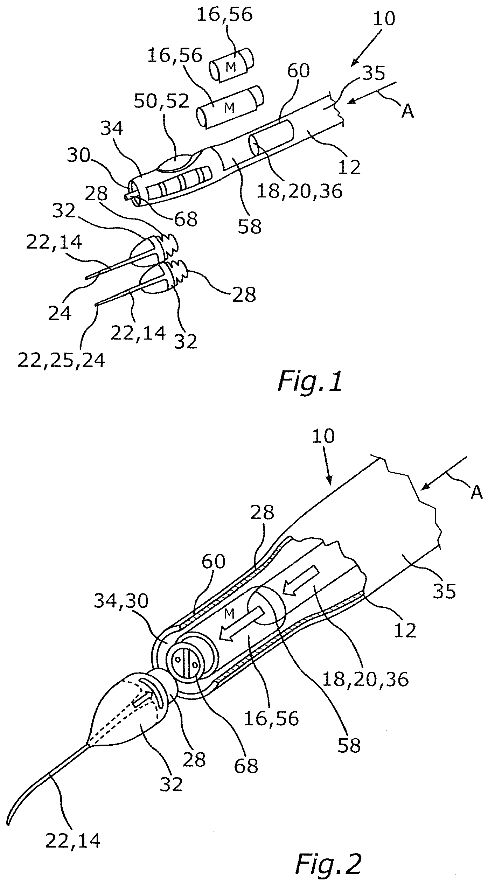

Fig. 1 shows a perspective view of first kind of pen-type dispenser 10 and replacable containers in the form of cartridges 56 as reservoirs 16 that can be inserted into the pen-type dispenser 10. Also shown are replacable hubs 32 that can be connected to dispenser 10 to repeatedly detach and re-attach nozzles 14 to and from the dispenser 10. The hubs 32 can be equipped with various applicators 24, such as a cannula 22 and/or a brush 25, such as a micro-brush. Also a foam type applicator (not shown) or other kind of applicator may be made available.

The Hub 32 comprises first connection means 28, e.g. an outer thread (Fig.1) or a part of a Luer Lock (Fig. 2) via which the hub 32 can be connected to the dispenser 10.

A proximal end 34 of the housing 12 comprises second connection means 30, e.g. an inner thread (Fig. 1) or a socket of a Luer Lock (Fig. 2) which are capable of engaging the corresponding first connection means.

In this connection it should be noted that the first and second connection means 28, 30 can also be used to code the dispensers in order to e.g. avoid cross-contamination between different applicators intended for different 1K materials.

Such pen-type dispensers generally have an elongate shape extending along a longitudinal axis A between the proximal end 34 and a distal end 35 of the dispenser 10.

In this connection it should be noted that proximal refers to that part of the dispenser 10 that in use thereof is closer to the patient and distal refers to that part of the dispenser 10 that in use thereof is further away from the patient.

Fig. 2 shows a perspective view of second kind of pen-type dispenser 10. Like the dispenser 10 of Fig. 1 the dispenser 10 of Fig. 2 is a reusable pen-type dispenser.

The dispenser 10 comprises a housing 12, and the nozzle 14 for dispensing a 1K material M, the nozzle 14 being attached to the housing 12 via the first and second connection means 28, 30. The dispenser 10 further comprises a reservoir 16 for storing the 1K material M, the reservoir 16 being arranged within the housing 12 of the dispenser 10. The dispenser 10 also comprises a material driving assembly 18 configured to act on the reservoir 16 via a plunger 20 to drive the respective 1K Material M through the nozzle 14, with the material driving assembly 18 at least partly being arranged within the housing 12.

The reservoir 16 is arranged in a chamber 58 of the dispenser, with the chamber 58 being arranged within a cover 60 of the dispenser 10.

The cover 60 is generally a part of the housing 12 and can be a part detachable from the housing 12 via a screw-type connection in a manner similar to a fountain pen for replacement of the cartridge 56.

In an alternative design the cover 60 may be a hatch that can be moved relative to the housing 12, e.g. in a sliding arrangement or a pivotable arrangement to permit access to the chamber 58 for replacement of a spent cartridge 56.

In a further alternative design the cartridge 56 could be inserted via the proximal end 34 via the second connection means 30 once the nozzle 14 has been removed from the dispenser 10.

A window may be present in the housing 12 of the dispenser 10, with the window showing a contents of a respective cartridge 56 inserted into the dispenser 10.

As indicated in Fig. 1, the dispenser 10 further comprises a passage 68 connecting the nozzle 14 with the chamber 58. The material is guided from the cartridge to the proximal end of the nozzle 14 via this passage 68 without coming into contact with other parts of the dispenser 10.

In order to activate the dispenser this further comprises an activator 50 in the form of a button 52. The activator 50 is associated with the nozzle 14 and the material driving assembly 18 for activating a movement of the material driving assembly 18 to dispense the material M via the nozzle 14 while the button 52 is pressed.

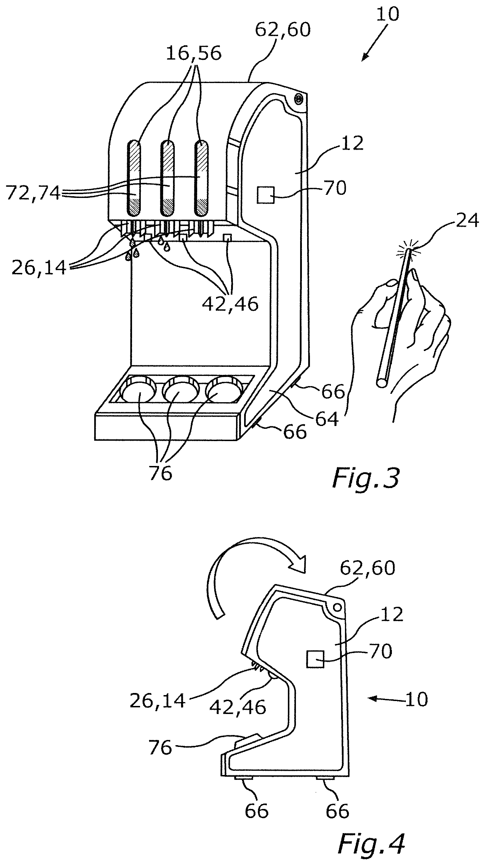

Fig. 3 shows a perspective view of a first kind of dispensing station as the dispenser 10 and of the associated applicator 24 arranged at a handle 66. The dispensing station may optionally be configured to be installed at a dental unit, i.e. a dentists' chair (not shown).

In this connection the handle 66 may be a rod at which a respective applicator 24 is attached for applying the material M in a patients' mouth.

The dispenser 10 comprises three nozzles 14 as outlets 26 for dispensing three respective 1K materials M from three different reservoirs 16, with the three nozzles 14 being attached to the housing 12 and connected or connectable to the reservoirs 16 that are arranged within the housing 12.

The dispenser 10 further comprises three different material driving assemblies 18 configured to act and cooperate with the three reservoirs 16 to drive the respective 1K Material M through a respective one of the three nozzles 14. The material driving assemblies 18 are completely arranged within the housing 12.

In order to replace the containers of the dispenser 10 this comprises a lid 62 as the cover 60. The lid 62 is pivotable relative to a base 64 of the housing 12 to enable access to chambers 56 for storing the reservoirs 16.

The base 64 comprises three drip pans 76 for catching excess material M that may drip from the respective outlet 26. In this connection ti should be noted that rather than having one drip pan 76 per nozzle, the base may comprise a single drip pan 76 for all nozzles 14 of the dispenser 10.

The dispenser also comprises the activator 50 in the form of a sensor assembly 42 for sensing the applicator 24 in the proximity of one of the three nozzles 14, i.e. beneath the respective nozzle 14 e.g. within one, two or three cms around each nozzle 14, via respective sensors 44 for activating a dispensing of materials M from the dispenser 10.

The sensor assembly 42 may comprises a position resolving sensor and/or several individual sensors 44, with monitoring areas of the position resolving sensor and/or the individual sensors 44 of the sensor assembly 42 being associated with a respective one of the one or more nozzles 14.

The dispenser 10 comprises three filling level indicators 72 in the form of windows 74. The windows 74 may optionally be provided with a scale in order to indicate how full the respective reservoir 16 is.

The indicators 72 indicate a continuous change in the filling level e.g. using a scale present at the window 74 or simply by showing full/empty reservoirs 16 via the windows 74. It is also possible that the further sensor 70 is capable of detecting a filing level and then transmitting a signal related thereto to the control unit 46 that then initiates a visible or audible signal to the user of the dispenser 10.

In this connection it should be noted that the dispenser 10 shown in connection with Figs. 1 and 2 may also comprise a filling level indicator 72 either in the form of a window or as a visible or audible signal output by the control unit 46.

Fig. 4 shows a side view of the dispenser 10 of Fig. 3. The dispenser 10 comprises feet 64 on which the dispenser can stand. If the dispenser is to be attached at a dental unit, i.e. a dentists' chair, then the feet 64 are removed and the dispenser 10 is attached to the dental unit via e.g. a screwed connection in order fix the dispenser 10 the dental unit. The nozzles 14 are fixed to the dispenser 10 as an outlet 26.

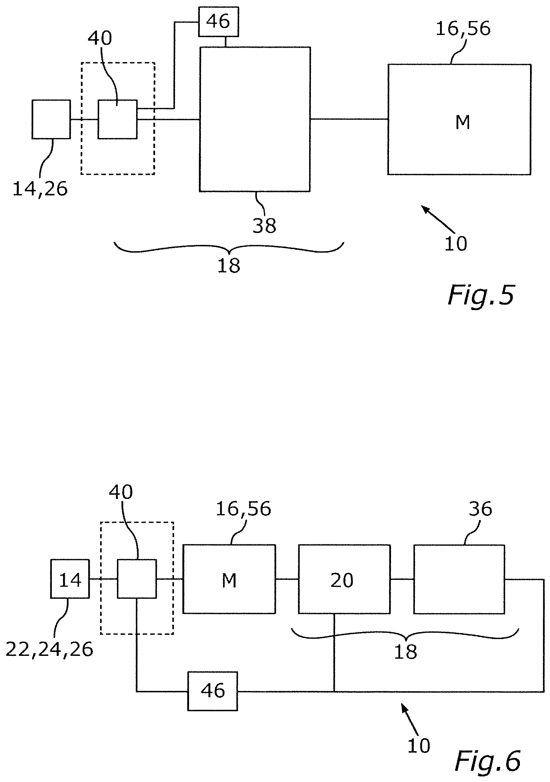

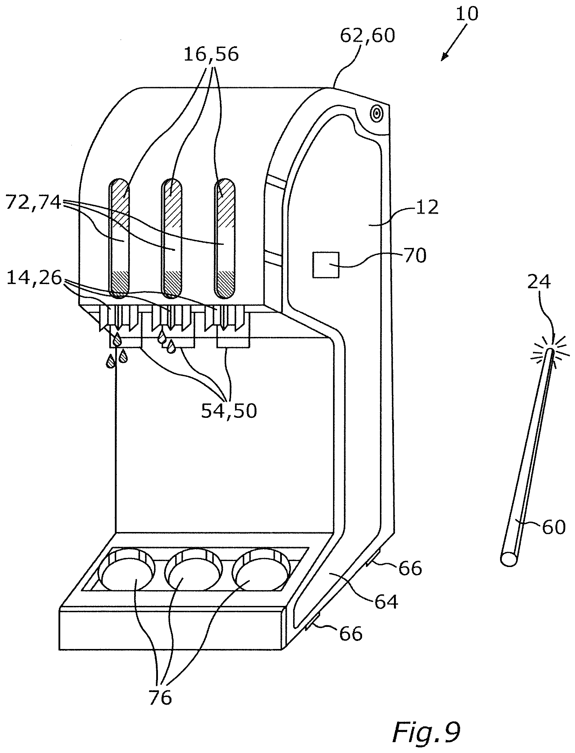

Fig. 5 shows a block diagram showing components of the dispenser 10. The dispenser 10 can either be a pen-type dispenser as shown e.g. in Figs. 1 and 2 or a dispensing station as shown in Figs. 3 and 9.

The dispenser 10 comprises a control unit 46 arranged within the housing 12. The control unit 12 is configured to initiate an activation of the respective material driving assembly 18 to act on the respective reservoir 16 to dispense the respective 1K material M via said nozzle 14 and/or outlet 26.

The material driving assembly 18 comprises a pump 38 optionally connected to a valve 40. On sensing an activation of the dispenser 10 the pump is driven in order to dispense material M from the reservoir 16.

The valve may be a dosage valve 40 that permits the through flow of a pred-determined amount of material M per unit time in order to dispense the either a pre-determined amount if material M, or an amount defined by the duration the activator 50 is activated in use of the dispenser 10. The control unit 46 can control and regulate the respective components of the dispenser 10.

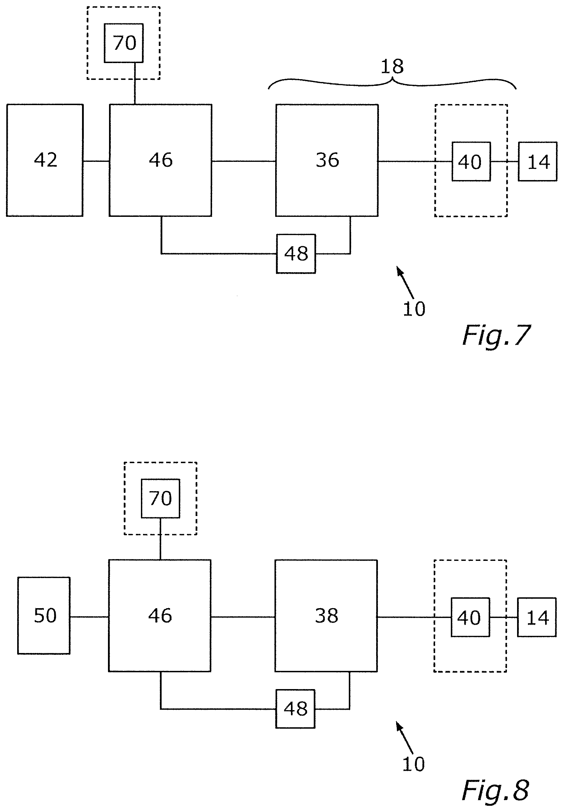

Fig. 6 shows a block diagram showing components of a further dispenser 10. The dispenser 10 can either be a pen-type dispenser as shown e.g. in Figs. 1 and 2 or a dispensing station as shown in Figs. 3 and 9. The material driving assembly 18 comprises the plunger 20 that is driven by a driver 36. The driver 36 may be an electric drive unit, e.g. an electric motor supplied with energy from a power supply 48 (see Figs. 7 and 8, e.g. present at a dentist's chair), a pneumatic drive unit e.g. driven by pressurized air available at a dentist s chair, or a mechanical drive unit.

On actuation of the activator 50 the control unit 46 activates the material driving assembly 18 by activating the driver 36 to drive the plunger 20 towards and possibly into the container, e.g. the cartridge or a sachet.

In order to regulate an amount dispensed the valve 40 may optionally be provided in a manner similar to the valve 40 mentioned in connection with Fig. 5.

Fig. 7 shows a block diagram showing electronic components of the dispenser 10. The dispenser 10 can either be a pen-type dispenser as shown e.g. in Figs. 1 and 2 or a dispensing station as shown in Figs. 3 and 9.

The control unit 46 is connected to the sensor assembly 42 that comprises the sensor 44 for sensing the presence or absence of the applicator 24. On receiving a signal from the sensor 44 that the applicator 24 is present in the pre-defined proximity of the sensor 44, the control unit 46 initiates an activation of the material driving assembly 18. The material driving assembly 18 shown comprises the driver 36 to drive the material M towards the nozzle 14.

A valve 40 may optionally be present between the driver 36 and the nozzle 14 for controlling and regulating an amount of material M dispensed via the nozzle 14 per unit time. In this connection it should be noted that the valve 40 may be arranged between the reservoir 16 and the nozzle 14, e.g. at the passage 68.

A further sensor 70 may also be provided which provides further parameters and/or signals from the dispenser 10 and/or of the environment of use of the dispenser 10. Such sensors and/or signals may comprise pressure sensors, temperature sensors, position sensors etc.

The power supply can be either a fixed power supply in the form of cables provided at a dentist's chair or in the form of a battery integrated into the pen-type dispenser.

Fig. 8 shows a block diagram showing electronic components of a further dispenser 10. The dispenser 10 can either be a pen-type dispenser as shown e.g. in Figs. 1 and 2 or a dispensing station as shown in Figs. 3 and 9.

The difference between the dispenser 10 of Fig. 7 and Fig. 8 is that rather than using the driver 36 to drive material M out of the reservoir 16 as is the case with Fig. 7, the dispenser 10 of Fig. 8 is provided with the pump 38.

Fig. 9 shows a perspective view of a second kind of dispensing station as the dispenser 10 and of an associated applicator 24 arranged at the handle 66.

The dispenser comprises three nozzles with a lever 54 being arranged at each nozzle as the activator 50 for activating the material driving assembly 18 associated with the respective nozzle to dispense the 1K material M via said nozzle 14 for the desired material M.

For all of the dispensers 10 shown herein the control unit 46 is configured to sense activation of the activator 50 on the basis of signals transmitted from the activator 50 to the control unit 46.

The control unit 46 is configured to control and/or to regulate the various material driving assemblies 18, i.e. the respective drivers 36, the respective pumps 38, the respective valves 40, on the basis of parameters relating to the foregoing and combinations of the foregoing, in order to dispense pre-defined amounts of material M per unit time.

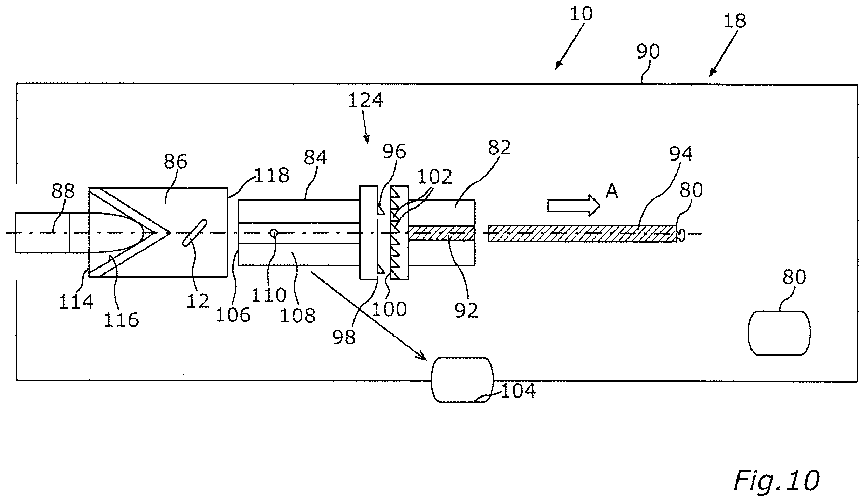

Fig. 10 shows a schematic view of components of a further kind of pen-type dispenser 10. The pen type dispenser 10 comprises a so-called body-knock to ratchet system as the material driving mechanism 18, i.e. as the actuation mechanism for dispensing material M.

The components of the body-knock to ratchet material driving mechanism 18 comprise a piston rod 80 that has a non-circular outer cross-section. The non-circular cross-section, i.e. in the example shown having two flattened sides, is provided so that the piston rod 80 is not rotatable relative to some of the components of the body-knock to ratchet material driving mechanism 18 at least during a dispensing process.

The body-knock to ratchet material driving mechanism 18 further comprises a ratchet cage 82 and a ratchet cylinder 84 that can engage one another for the purpose of dispensing and can be disengaged from one another for the purpose of resetting.

The piston rod 80 is arranged within the ratchet cage 82 and the piston rod 80 cannot be rotated relative to the ratchet cylinder 84. This is because the ratchet cylinder 84 has an inner cross-section that is shaped to match the outer cross-section of the piston rod 80.

The piston rod 80 can be moved in the axial direction, i.e. linearly, due to an internal thread 92 present at the ratchet cage 82 that engages an outer thread 94 of the piston rod 80 via which the piston rod 80 can be lifted in the axial direction.

The ratchet cage 82 is fixed inside an actuator housing 90 against turning or movement. The inner thread 92 matches with the piston rod 80 outer thread 94. This will lift the rod based on rod's turn coming from ratchet-cylinder 84.

When the ratchet cylinder 84 engages the ratchet cage 82, the thread acting between the ratchet cage 82 and the piston rod 80 causes the piston rod 80 to move along the longitudinal axis A.

The ratchet cylinder 84 comprises ratchet teeth 96 at its end 98 facing the ratchet cage 82. The end 100 of the ratchet cage 82 facing the ratchet cylinder 84 comprises ratchet recesses 102 that are configured to receive the ratchet teeth 98 when the ratchet cage 82 engages the ratchet cylinder 84.

The interior of the ratchet cage 84 has a passage 104, with the passage 104 having a hollow profile matching the outer profile of the piston rod 80. The piston rod 80 cannot turn inside this passage 104, but can slip along this profile of the passage 104.

The ratchet cylinder 84 is received within a cylinder 86. The cylinder 86 is configured to move the ratchet cylinder 84 and to thereby effect a movement of the ratchet cylinder 86. This movement is a rotational movement.

An outer surface 108 of the ratchet cylinder 84 comprises one or more fingers 110. The one or more fingers 110 are guided in one or more respective channels 112 present in the cylinder 86. As the cylinder 86 is moved along the longitudinal axis A, the one or more fingers are entrained by the respective one or more channels 112 bringing about a rotation of the ratchet cylinder 84 and of the ratchet cage 82 causing the piston rod 80 to axially move along the longitudinal axis A.

In this connection it should be noted that additionally or alternatively the fingers 110 could also be arranged at the cylinder 86 and the channels 112 could be arranged at the ratchet cylinder 84.

A length of the channel 112 and its pitch in relation to a pitch of the thread of the piston rod 80 provides a gear ratio for the movement of the piston rod 80 and can be selected in dependence on the desired lift of the piston rod 80 for the desired application, i.e. whether more or less material M should be dispensed using the dispenser 10.

An end 114 of the cylinder 86 remote from the end 118 facing the ratchet cylinder 84 is formed as a hollow cone 116. An anchor 88 can be moved towards this hollow cone 116.

An end 106 of the ratchet cylinder 84 is received within the cylinder 86.

The elements anchor 88, cylinder 86, ratchet cylinder 84, ratchet cage 82 are axially aligned with each other. Activation of the dispenser 10 is achieved by bending, i.e. deforming, a part of the housing of this unit, the fixed anchor 153 is deflected from the central axis and, through contact with the hollow cone 116, will displace the cylinder 86 in the longitudinal direction along the longitudinal axis A, which ultimately causes the rotary movement of ratchet cylinder 84 and thus of rod 80.

In this connection it should be noted that the arrangement could also be reversed, with the hollow-cone being fixed and the anchor being a part of the cylinder 86.

Thus, activation of the dispenser 10 brings about an axial movement of the cylinder 86 resulting in a rotation of the ratchet cylinder 84 and of the ratchet cage 82 leading to an axial displacement of the piston rod 80 bringing about a dispensing of material M stored in a cartridge of the dispenser 10.

A resetting mechanism 124 is provided by the cooperation between the ratchet cage 82 and the ratchet cylinder 84. When the ratchet cage 82 is disengaged from the ratchet cylinder 84, e.g. supported by a cage spring 126, the ratchet cylinder 84 can rotate freely relative to the ratchet cage and thereby rotate the piston in the opposite direction to the dispensing direction, i.e. from right to left in Fig. 10 to bring the piston rod 80 back into its initial position.

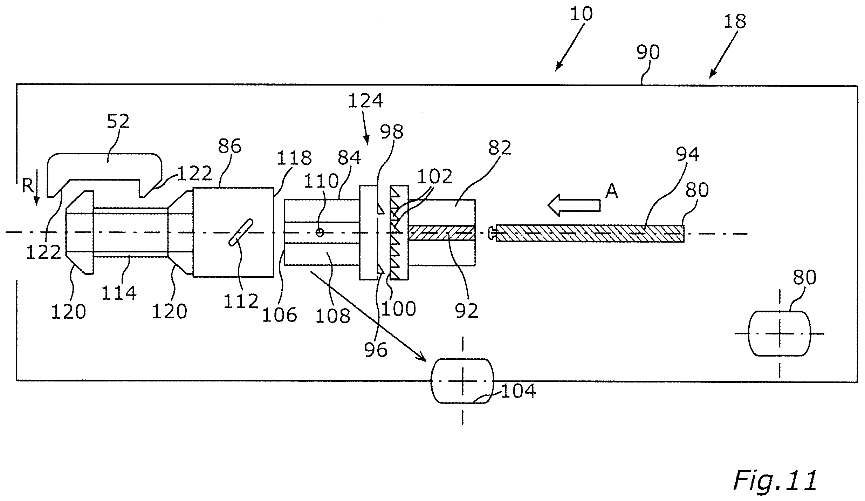

Fig. 11 shows a schematic view of components of yet a further kind of pen-type dispenser 10. The pen-type dispenser 10 comprises a so-called sideknock to ratchet system as the material driving mechanism 18.

The difference to the embodiment shown in Fig. 10 lies in the shape and arrangement of the respective cylinder 86 and a button 52 that replaces the anchor 88. The remaining parts of the mechanism work in a similar manner. However, the direction in which the piston rod 80 is moved is reversed between the two designs. In Fig. 10 the movement is from left to right in the view of the drawing on dispensing and in Fig. 11 the movement is from right to left in the view of the drawing.

The outer surface of the cylinder 86 comprises at minimum one and preferably two surfaces inclined with respect to the longitudinal axis A acting as cams 120. The button 52 comprises at least one and preferably two radial abutments 122 also having surfaces inclined with respect to the longitudinal axis A.

The inclined surfaces of the abutments 122 and of the cams 120 are arranged at least substantially in parallel to one another or in parallel to one another such that on pressing the button 52 in the radial direction R towards the cylinder 86 the abutments entrain the cams 120 resulting in an axial movement of the cylinder 86 along the longitudinal axis, so that the ratchet cage 82 is rotated via the ratchet cylinder 84 bringing about a displacement of the piston rod 80.

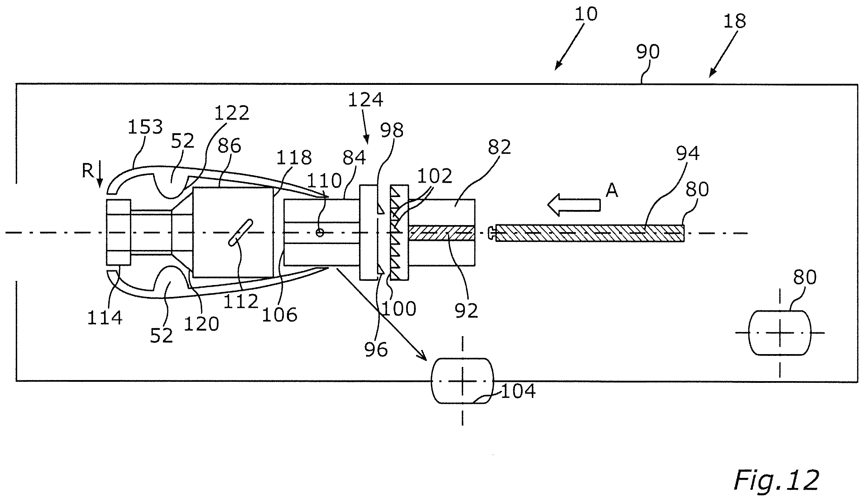

Fig. 12 shows a view of components of yet a further kind of pen-type dispenser 10. The pen-type dispenser 10 comprises a so-called radial elastic sideknock to ratchet-system as the actuation mechanism 18.

The button-cover 153 of the embodiment shown in Fig. 12 extends radially around the cam 120 of the cylinder 86. On pressing the button-cover 153, this causes the button 52 to move the cylinder 86 for lifting the piston rod 80 in the manner shown in the foregoing.

This design of button-cover 153 and actuation mechanism 18 has the advantage that the pen-type dispenser 10 can be held and activated in any orientation.

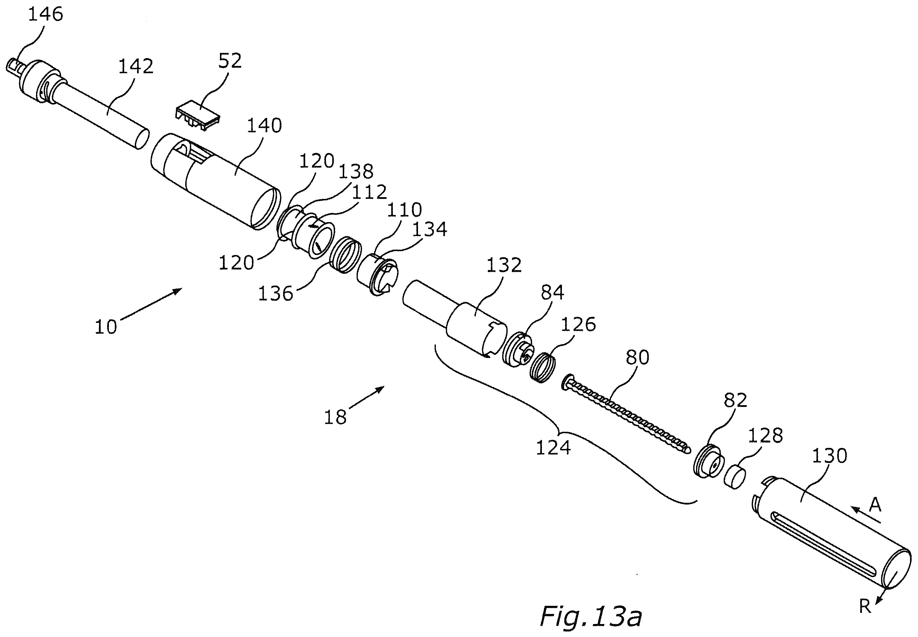

Fig. 13a shows an exploded view of components of a further kind of pen-type dispenser 10 that is configured as a sideknock to ratchet system as the material driving mechanism 18.

The dispenser 10 comprises from back to front a rear body 130 in which the piston rod 80 an indicator drum 128 and the ratchet cage 82 are arranged. The piston rod 80 is threadedly engaged with the ratchet cage 82 via its outer thread 94 that engages the inner thread 92.

A coupling 148 is formed between the rear body 130 and the ratchet cage 82. The coupling 148 forms a gear rim connection between the rear body 130 and the ratchet cage 82 such that the ratchet cage 82 cannot move relative to the rear body 130.

The ratchet cylinder 84 is arranged within an inner cylinder 132 and is configured to act as a piston rod guide as the piston rod 80 is permit to move axially along the longitudinal axis A along the passage 104 formed in the ratchet cylinder 84, but cannot rotate relative to the ratchet cylinder 84 due to the complementary shaped cross-sections of the passage 104 and of the piston rod 80.

The ratchet cage 84 cannot move relative to the inner cylinder 132. This is because a recess 150 formed at the inner cylinder 132 engages a projection 152 formed on an outer surface of the ratchet cage 84.

A cage spring 126 is arranged between the ratchet cage 82 and the ratchet cylinder 84. The cage spring 126 biases the ratchet cage 82 with respect to the ratchet cylinder 84. These thereby form components of the resetting mechanism 124.

A rotary member 134 is arranged at the inner cylinder 132 and is biased relative to a rotary slide 138 via a rotary slide spring 136. On pressing the button 52, the rotary slide 138 is entrained towards the rotary member and thereby biases the rotary slide spring 136. On releasing the button 52, the rotary slide spring 136 relaxes and moves the rotary slide 138 back towards the button 52.

The rotary slide 138 comprises the cams 120 that are acted on by the abutment present at the button 52formed at an inner surface of the button 52. Advantageously, the rotary slide 138 is arranged within the main body 140.

A cartridge holder 142 can be screwed into the main body 140 via a quarter turn coupling. On reaching its end position the cartridge holder can lock into this position by means of a snap-fit type of connection formed by a nose at surface of the cartridge holder 142 facing a surface of the main body 140. In this connection it should be noted that the arrangement of the snap-fit connection can be reversed, i.e. the nose can be present at the main body etc.

The snap-fit connection is also known as a click notch system. A double start thread may be provided as the quarter turn coupling for attachment to the actuator housing.

When the cartridge holder 142 is its locked position this directly biases the ratchet cylinder 84 into engagement with the ratchet cage 82. On removing the cartridge holder 142, the cage spring 126 relaxes axially moving the ratchet cylinder 84 out of engagement from the ratchet cage 82.

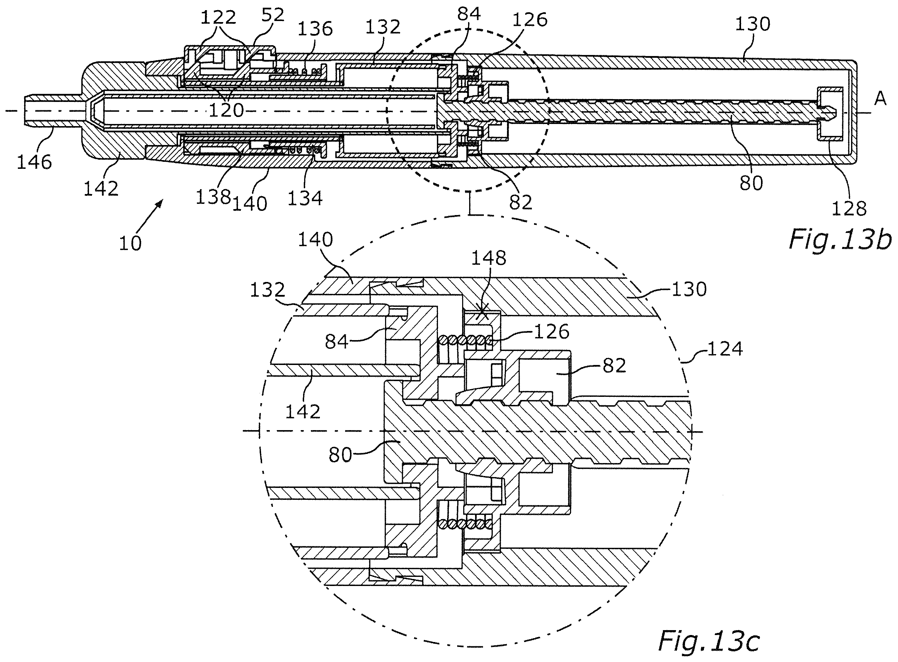

Fig. 13b and c show sectional illustrations of the pen type dispenser of Fig. 13a with the cartridge holder attached at the dispenser 10.

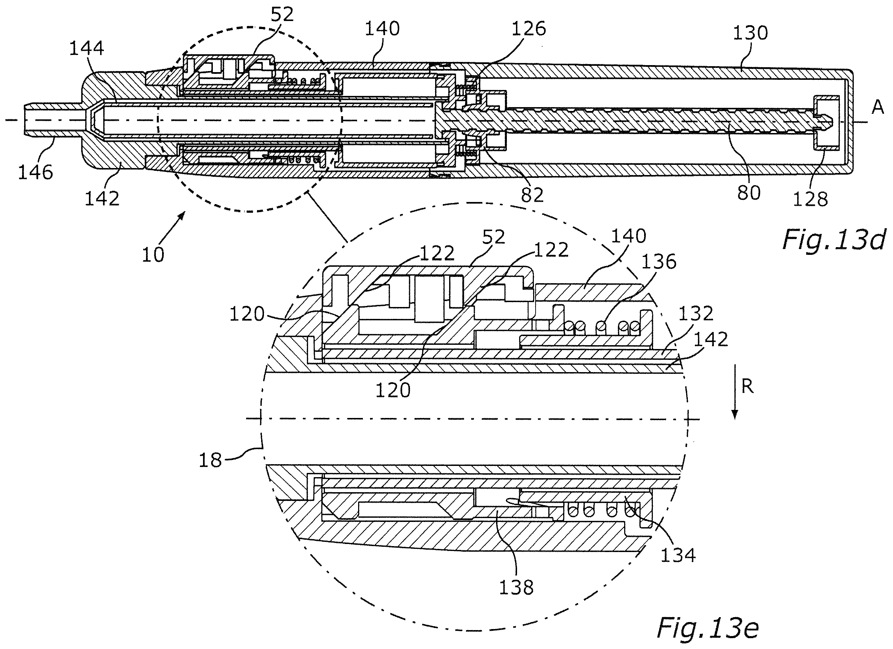

Fig. 13d and e show sectional illustrations of the pen type dispenser 10 of Fig. 13a with the cartridge holder attached at the dispenser 10 and the button 52 depressed. In this way the dispenser 10 is in a pre-dispensing mode, i.e. is capable of being activated to dispense material M.

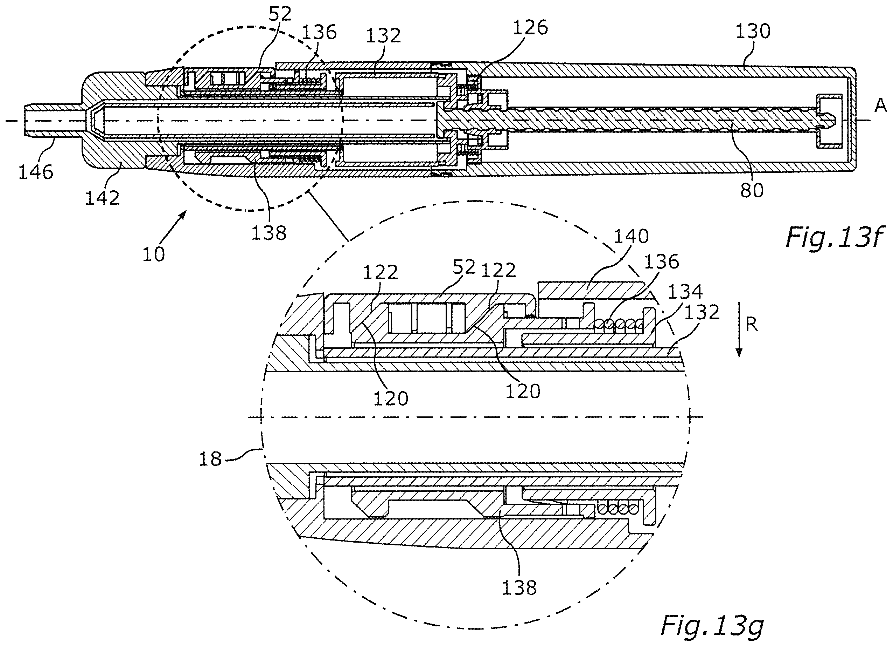

Fig. 13f and g sectional illustrations of the pen type dispenser of Fig. 13a with the cartridge holder attached at the dispenser 10 and the button 52 pressed, i.e. the dispenser 10 is in the dispensing mode and capable of driving material M out of the dispenser 10 e.g. via the cannula (not shown)..

On pressing the button 52, the abutment 122 acts on the cam 120 of the rotary slide 138 bringing about a movement of the rotary slide 138 along the longitudinal axis A. The rotary slide 138 is connected to the rotary member via one the fingers 110 acting in the channel 112. The finger 110 acting in the channel 112 will convert the linear movement into a rotational movement of the rotary member 134.

The rotary member 134 is splined to the inner cylinder 132 which thus rotates together with the rotary member 134 as this is turned. Since the inner cylinder 132 is rotationally fixed to the ratchet cylinder 84, this likewise rotates bringing about a displacement of the piston rod in the axial direction along the longitudinal axis A. This lift per push of the button 52 is then related to the dose administered per push of the button 52.

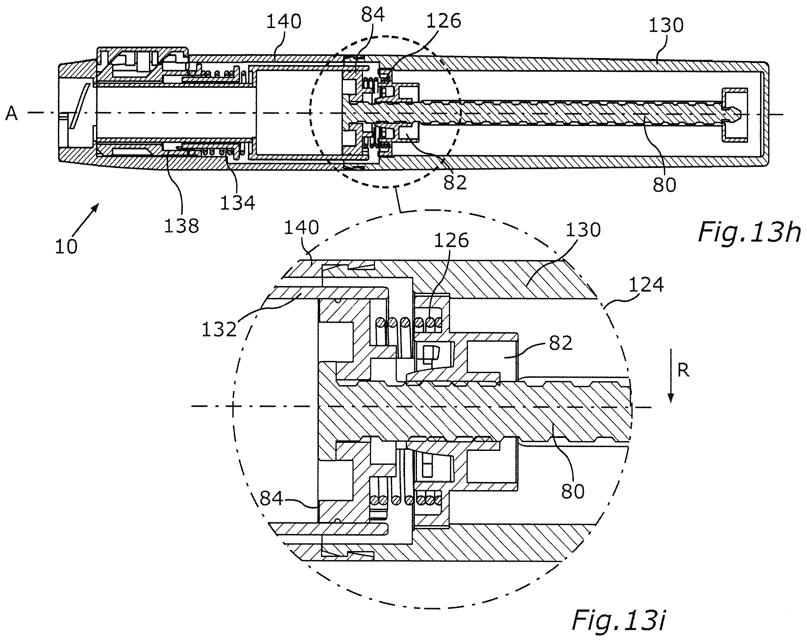

Fig. 13h and i sectional illustrations of the pen type dispenser of Fig. 13a with the cartridge holder removed from the dispenser 10.

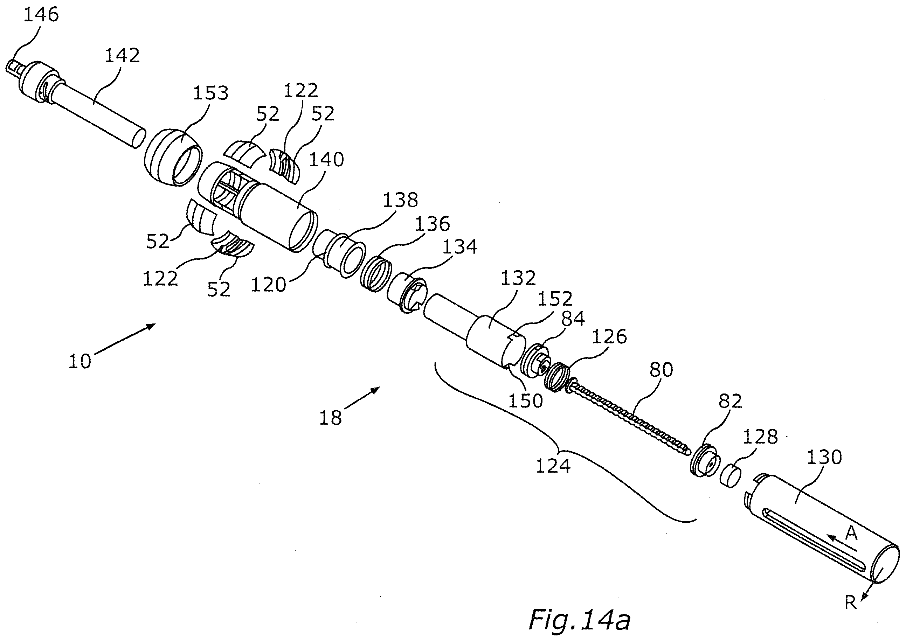

Fig. 14a shows an exploded view of components of a further kind of pen-type dispenser 10 that is configured as a radial elastic sideknock to ratchet system as the material driving mechanism 18.

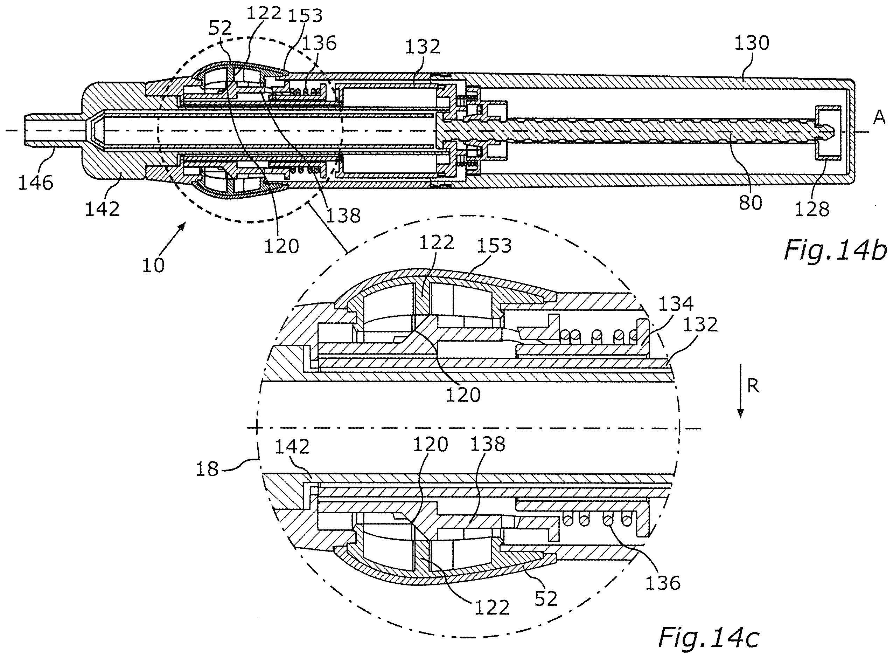

Fig. 14b shows a sectional view of the pen-type dispenser of Fig. 14a with the cartridge holder 142 attached and the button 52 depressed. Fig. 14c shows an enlarged view of Fig. 14b.The abutment 122 is not in engagement with the cam 120 of the rotary slide 138 in this position.

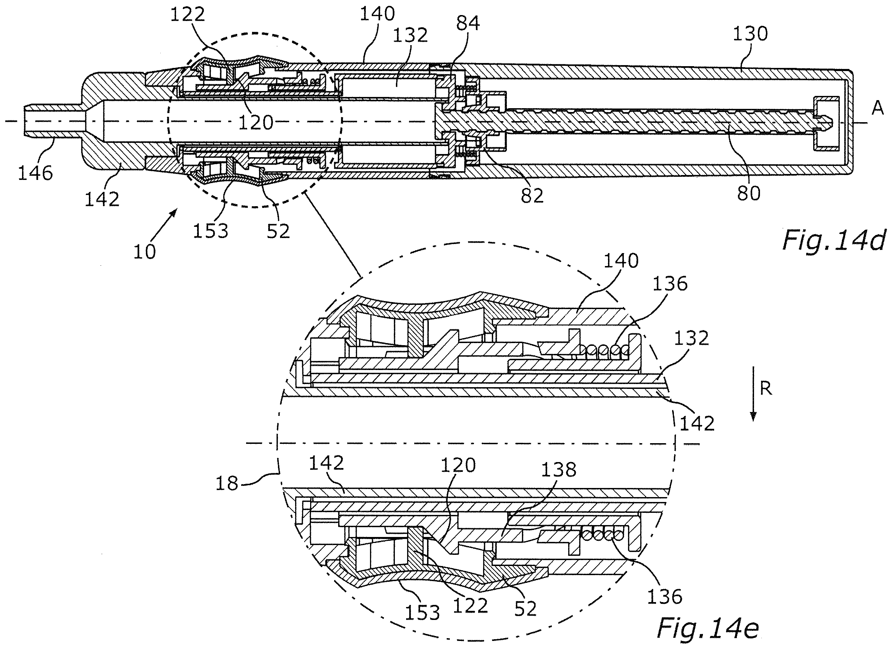

Figs. 14d and e show sectional views of the pen-type dispenser of Fig. 14a. In these drawings one can see that the button-cover 153 and the related button 52 has been pressed forcing the abutment 122 to move in the radial direction R and due to the complementary shaped inclined surfaces of the abutment 122 and the cam 120, the radial movement of the abutment 122 causes a linear movement of the rotary slide 138.

Hence a radial activation of the button 52 is configured to bring about an axial movement of the piston rod 80.This movement is effected by means of only mechanical components.

The button-cover 153 is an annular shaped button radially extending about the main body 140. The button 52 is more elastic than the main body 140.

The button-cover 153 extends around the button 52having the abutment 122 facing radially inwardly towards the rotary slide 138 having the cam 120 that is engaged by the button 52.

On pressing the button-cover 153, the button 52engages the rotary slide 138 causing this to slide backwards along the longitudinal axis A biasing the spring 136 while at the same time
In contrast to the design shown in Fig. 13 in the dispenser 10 of Fig. 14 the button-cover and related button 52 extends circumferentially around the main body 140 and hence the dispenser 10 can be held in any orientation and the button 52 can still be pressed by a user of the dispenser 10. This is highlighted in Fig. 14e where the pressing of the elastic button-cover 153 causes a deflection of the button 52 at the top and bottom in the views shown.

For both of the pen-type dispensers shown in Figs. 13 and 14, the resetting mechanism 124 works in the same manner. Once the cartridge holder 14 is removed as indicated in Fig. 13h and j, the cage spring 126 will relax releasing the engagement between the ratchet cylinder 84 and the ratchet cage 82.

And on turning the main body 140 relative to the rear body 130, the piston rod 80 can be rewinded into its starting position due to the coupling between the ratchet cage 82 and the rear body 130.

On reattaching the cartridge holder 142 this will bias the cage spring 126 and the ratchet cage and the ratchet cylinder once again engage one another so that the piston rod 80 can be moved during the dispensing process.

The cartridge holder 142 can either be configured to hold a separate cartridge 144 or be formed as the cartridge. The cartridge holder 142 is releasably held at an actuator housing formed by the main body 140 and the rear body 130.

The piston rod 80 is axially moveable towards and into the cartridge respectively the cartridge holder 142.

At least one of the ratchet cage 82 and the ratchet cylinder 84 comprises one or more projections or teeth 96 that engage one or more recesses 102 present at at least one of the ratchet cage 82 and the ratchet cylinder 84.

The dispenser 10 further comprises a rotatable body or member 134. A rotation of the rotatable body 134 is brought about by pressing an actuator, i.e. the button 52 of said dispenser 10.

The cartridge holder 142 is configured to receive a cannula (not shown) at a cannula attachment 146.

The cartridge holder 142 is configured to urge the resetting mechanism into an engaged state where the piston rod cannot rotate relative to the housing and on removal of the cartridge holder 142 the contact between the cartridge holder 142 and the resetting mechanism is released to enable a rotation of the piston rod and hence a resetting of the piston rod into its original starting position.

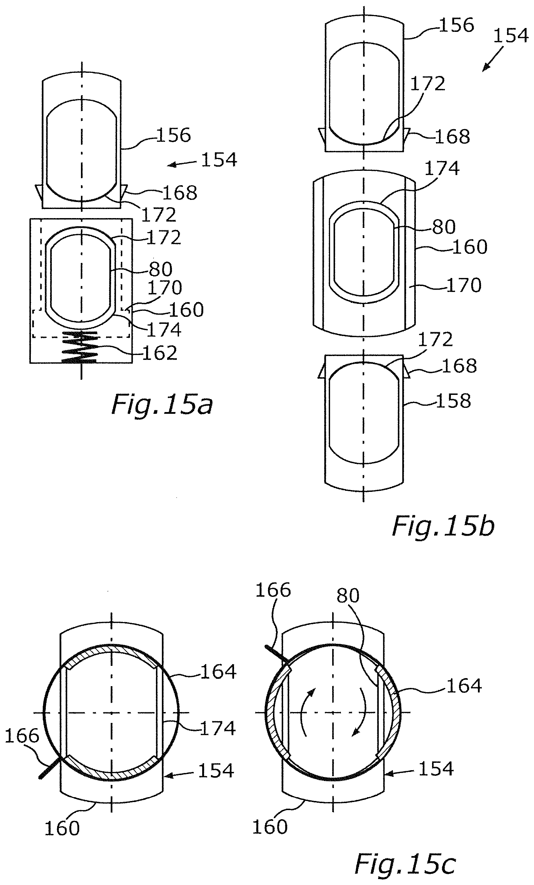

Fig. 15a to c show various views of different kinds of a clamping mechanism 154.

Fig. 15a shows a clamping mechanism 154 comprising a fixed cage element 160 in which a upper cage element 156 is slideably arranged in a guide slot 170. The upper cage element 156 is biased with respect to the piston rod 80 via a spring 162. On pressing the upper cage element 156 towards the fixed cage element 160 the engagement of the piston rod 80 via the clamping mechanism 154 can be released to permit a resetting of the piston rod 80 into its original position for reloading the new cartridge 56 into the dispenser 10.

The upper cage element 156 comprises two guide cams 168 which are guided in the guide slot 170 and that can abut an edge of the guide slot to prevent a removal of the upper cage element 156 from the fixed cage element 160.

In the example shown the guide cams 168 have a triangular shape, but it is possible to employ different shapes. The triangular shape of the guide cam 168 enables a simpler installation within the fixed cage element 160 in contrast to its removal.

Each of the fixed cage element 160 and the upper cage element 156 comprise an abutment surface 172 that is configured to clampingly engage the piston rod 80 in the clamped position and to be disengaged from the piston rod in the unclamped position.

It should be noted that the upper cage element 156 can have a part that is present in the form of a reset button and that can be engaged from the outside of the housing 12 of the dispenser 10.

It should further be noted that the fixed cage element 160 comprises an elongate slot 174 that is shaped complementary to the outer circumference of the non-circular piston rod 80. When the clamp of the clamping mechanism 154 is released the piston rod can be axially moved relative to the fixed cage element. When the clamping mechanism is engaged the piston rod 80is clamped by the moveable part of the clamping mechanism 154.

Fig. 15b shows a further design of the clamping mechanism 154 that comprises the upper cage 156, a lower cage element 158 and the fixed cage element 160. Such a clamping mechanism ca n symmetrically clamp the piston rod 80.

It should be noted that the lower cage element 158 can be formed similar to and preferably identical to the upper cage element 156 and can eb arranged within the fixed cage element in a manner similar to the example shown in Fig. 15a. Also in this case the lower cage element 158 and the upper cage element 156 are slideably arranged within the fixed cage element 160.

Fig. 15c shows a further type of clamping mechanism 154 that comprises a rotatable cage element 164 arranged within the fixed cage element 160. Part of the clamping mechanism 154, i.e. the rotatable cage element 164 can be rotated relative to the remaining part of the clamping mechanism 154, i.e. the fixed cage element 160.

An angle of rotation can be selected in the range of 30 to 120°, preferably in the range of 45 to 105° relative to the remaining parts of the clamping mechanism 154 for resetting. In the example shown the angle of rotation is selected as 90°.

The rotation of the rotatable cage element 164 relative to the fixed cage element 160 can be brought about by moving a lever 166 relative to the fixed cage element 160. In the clamped position the rotatable cage element 164 clamps the piston rod 80 to the fixed cage element 160 and in the unclamped position the engagement of the piston rod 80 via the rotatable cage element 164 is released to permit a movement of the non-circular piston rod 80 relative to the elongate slot of the fixed cage element 160.

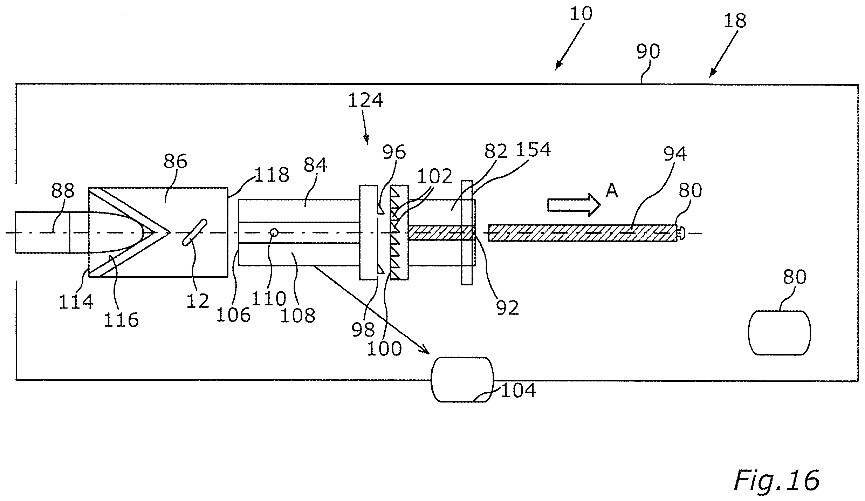

Fig. 16 shows a view of a kind of pen-type dispenser 10 as described in connection with Fig. 10, i.e. the pen type dispenser 10 comprises a so-called body-knock to ratchet system as the material driving mechanism 18. One of the kinds of clamping mechanisms 154 as described in connection with one of Figs. 15a to c can be arranged at the ratchet cage 82 as indicated in the drawings.

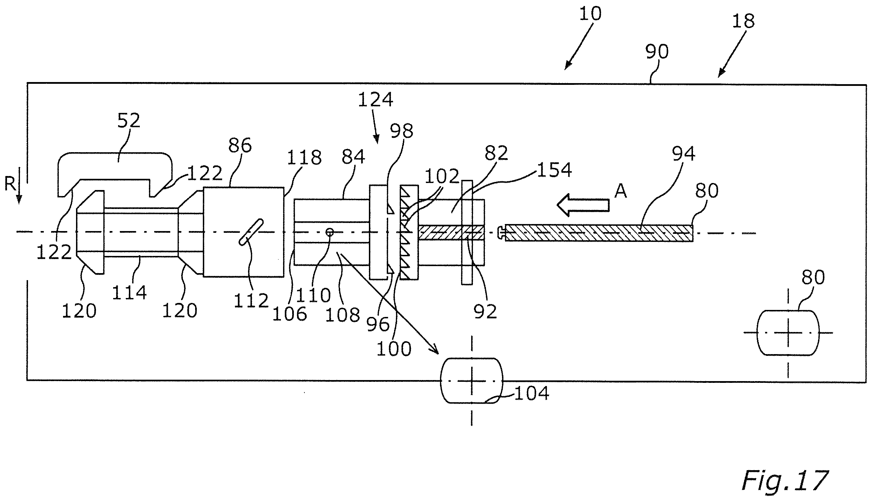

Fig. 17 shows a view of a kind of pen-type dispenser 10 as described in connection with Fig. 11. The pen-type dispenser 10 comprises a so-called sideknock to ratchet system as the material driving mechanism 18. The clamping mechanism is arranged within the dispenser 10.

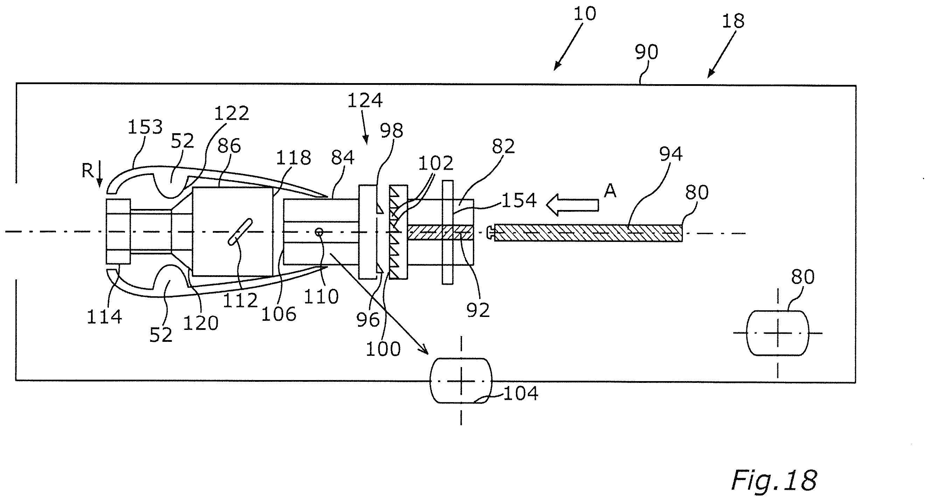

Fig. 18 shows a view of a kind of pen-type dispenser 10 as described in connection with Fig. 12 The pen-type dispenser 10 comprises a so-called radial elastic sideknock to ratchet-system as the actuation mechanism 18. The dispenser 10 has the clamping mechanism 154 arranged therein as part of the resetting mechanism.

It should be noted that any of the kinds of clamping mechnisms described in the foregoing can be arranged with any kind of pen-type dispenser 10 described herein and can be used to clamp the piston rod 80 during dose dispensing and can be used to release the clamp of the piston rod 80 during resetting.

During resetting the pen-type dispenser 10 may be held in a vertical position such that the piston rod 80 can drop back into its original position due to gravity. Additionally or alternatively, the piston rod 80 may be biased relative to the other components of the pen-type dispenser with the aid of a spring (not shown) that once the clamp on the piston rod 80 via the clamping mechanism 154 is released can automatically move the piston rod 80 into its original position.

It should further be noted that regardless of the type of clamping mechanism 154 used in the examples shown in Figs. 16 to 18, the clamping mechanism 154 can be actuated from the outside of the housing 12, either by pressing one of the upper cage element 156, the lower cage element 158 or rotating the rotatable cage element 164 via the lever 166.

The engagement of the respective moveable element of the clamping mechanism 154, i.e. one of the upper cage element 156, the lower cage element 158 and the rotatable cage element 164, with the fixed cage element 160 can be assisted by a respective biasing member, e.g. one or more springs 162.

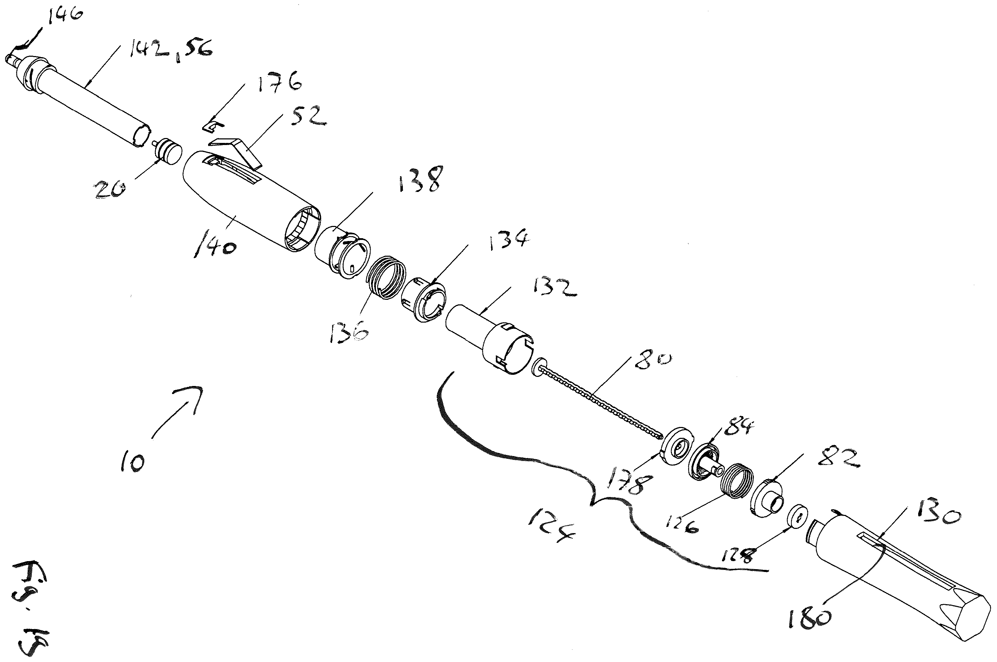

Fig. 19 shows a view of components of a further type of pen-type dispenser 10. The pen-type dispenser comprises the cartridge holder 142 that may have a cartridge integrally formed therein or that may hold a removable cartridge 56, this acts as a tank for holding the dental 1K material within the pen type dispenser 10.

The plunger 20 acts on the dental material stored in the cartridge 56 respectively the cartridge holder 142 on dispensing and helps in releasing/pushing out the dental material in operation of the pen-type dispenser 10.

The main body 140 supports components of the dispensing mechanism, i.e. the cartridge holder 142, respectively the cartridge 56, a push button support 176, the button 52, the rotary slide 138, the rotary slide spring 136the rotary member 134 and the inner cylinder 132 of the pen-type dispenser 10 and acts as an outer shell.

The push button support 176 holds, i.e. supports the push button 52 in use. In this connection it should be noted that the push button support 176 is shown as a separate component in the drawing of Fig 19, but can likewise be formed integrally together with the main body 140.

On pressing the button 52, i.e. the angled hinge like button 52, the dispensing is started. The pressing of the button 52 brings about a linear displacement of components of the dispenser 10, with the rotary slide 138 converting the linear motion of the button into rotary motion.

The rotary slide spring 136 supports in biasing the button 52 back towards the push button support 176
The rotary member 134, the inner cylinder 132, the piston rod 80 and the piston guide 178 transfer the rotary motion into a setting of the dose to be dispensed.

The ratchet 84 has a connection with the piston rod 80 and converts the rotary motion into linear motion of the plunger rod 80 for dispensing the previously set dose.

The ratchet spring 126 supports in releasing the ratchet 84 and the cage 82 (also known as a ratchet support) and in biasing these back into their original position. The cage 82 blocks the rotary motion of ratchet 84.

The indicator drum 128 indicates the remaining amount of adhesive/fluid inside the cartridge hlder 142 respectively the cartridge 56.

The rear body 136 supports the rear mechanism (i.e. the ratchet 84, the ratchet spring 126 and the cage 82) of the pen 10 and acts as an outer protective shell for the rear mechanism.

The process of dispensing via the dispenser 10 is started by applying finger pressure on the push button 52 and pushing the push button 52 inward, the push button 52 is connected at both ends, one end with main body 140, e.g. via the push button support, and other end with the rotary slide 138 enabling rotary slide/circular motion at the connection's.

The pressure applied expands the push button 52 by deflecting it at the hinge into a longer shape linearly and pushes the rotary slide 138, the rotary slide 138 slides within the main body 140 and has a rotary cam slot connection with the rotary member 134. The sliding movement of the rotary slide 138 is converted into a rotary/angular movement of the rotary member 134 via a non-illustrated rotary cam slot connection. The angular movement is transferred to the inner cylinder 132 through a toothed connection. It should be noted that similar mechanisms have been described in the foregoing in connection with the further types of pen-type dispensers 10 shown herein.

The piston guide 178 has a radially fixed and axially sliding slotted connection with the inner cylinder 132, the piston guide 178 further receives the angular movement from the inner cylinder 132 through a radially fixed connection and transfers the same to the piston rod 80 through a slotted connection. The piston rod 80 has a slotted connection with the inner cylinder 132 which enables the linear movement through the inner cylinder 132 and the rotary movement with the inner cylinder 132.

The ratchet 84 is connected to the piston rod 80 through a screw connection, the angular movement received by the piston rod 80 is converted into the linear motion through the screw connection. The ratchet 84 is connected to the cage 82 via a toothed connection, such as is described in the foregoing, and is also free to rotate independently when the tooth is released. The cage 82 has a fixed connection with the rear body 136.

The indicator drum 128 is snap fitted with the piston rod 80 and moves along with the piston rod 80. The linear motion of the piston rod 80 pushes the adhesive/fluid out of the cartridge holder 142 respectively the cartridge 56 with the aid of the plunger 20. The volume of remaining adhesive/fluid in the pen-type dispenser is indicated by the indicator drum 128 through a window 180 in the form of a cut-out on the rear body 136. In this way the dispenser 10 comprises a filling level indicator.

The loaded spring pressure of the rotary slide spring 136 ensures that the push button 52 returns back to its original position once the pressure on the push button 52 is released.

Replacement of the cartridge holder 142 respectively of the cartridge 56 and retracting of the piston rod piston rod 80 to its original position is established by the resetting mechanism 124.

Once the cartridge holder 142 respectively the cartridge 56 is empty, the piston rod 80 is at the front-end position of the cartridge holder 142 respectively of the cartridge 56. The cartridge holder 142 respectively the cartridge 56 is fixed at the main body 140 via a thread connection and the cartridge holder 142 respectively the cartridge 56 exerts the pressure on the piston guide 178 and the ratchet 84 by compressing the ratchet spring 126 and holding the ratchet 84 in the locked position through the toothed connection with the cage 82.

Once the used cartridge holder 142 respectively the used cartridge 56 is removed the pressure is released making the ratchet 84 free from its locked position through the expansion of the ratchet spring 126, hence allowing the ratchet 84 to freely rotate. When the new cartridge holder 142 respectively the new cartridge 56 is replaced the linear pressure is exerted on the piston rod 80 causing the ratchet 84 to rotate and retract the piston rod 80 to is original position.

Working principle by eliminating the rotary member 134 and connecting the rotary slide 138 and Inner cylinder inner cylinder 132 through the rotating cam slot on the inner cylinder 132.

The process is started by applying finger pressure on the push button 52 and pushing the push button 52 inward, the push button 52 is connected at both ends, one end with main body 140and other end with rotary slide 138 enabling rotary slide/circular motion at the connection's, the pressure applied expands the push button 52 linearly and pushes the rotary slide 138. The rotary slide 138 slides relative to the main body 140 and has a rotary cam slot connection with the inner cylinder 132.

The sliding movement of rotary slide 138 is converted into a rotary/angular movement of inner cylinder 132. The piston guide 178 has a radially fixed and axially sliding slotted connection with the inner cylinder 132.

The piston guide 178 further receives the angular movement from the inner cylinder 132 through radially fixed connection and transfers the same to the piston rod 80 through a slotted connection. The piston rod 80 has a slotted connection with the inner cylinder 132 which enables the linear movement through the inner cylinder 132 and rotary movement with the inner cylinder 132. The ratchet 84 is connected to the piston rod 80 through a screw connection, the angular movement received by the piston rod 80 is converted in the linear motion through the screw connection. The ratchet 84 is connected to the cage 82 via a toothed connection and also free to rotate independently when the tooth is released.

The cage 82 has a fixed connection with the rear body 136, the indicator drum 128 is snap fitted with the piston rod 80 and moves along with the piston rod 80, the linear motion of the piston rod 80 pushes the adhesive/fluid out of the cartridge holder 142 respectively the cartridge 56 with the aid of the plunger 20. The remaining adhesive/fluid is indicated by the indicator drum 128 through the window cut-out on the rear body 136, the loaded spring pressure of the rotary slide spring 136 ensures that the push button 52 returns back to its original position once the pressure on the push button 52 is released.

### List of reference numerals:

- 10: dispenser
- 12: housing
- 14: nozzle
- 16: reservoir
- 18: material driving assembly
- 20: plunger
- 22: canula
- 24: applicator
- 25: brush
- 26: outlet
- 28: first connection means
- 30: second connection means
- 32: hub
- 34: proximal end of 12
- 35: distal end of 12
- 36: driver
- 38: pump
- 40: valve
- 42: sensor assembly
- 44: sensor
- 46: control unit
- 48: power supply
- 50: activator
- 52: button
- 54: lever
- 56: cartridge
- 58: chamber
- 60: cover
- 62: base
- 64: foot
- 66: handle
- 68: passage
- 70: sensor
- 72: filling level indicator
- 74: window
- 76: drip pan
- 80: rod
- 82: ratchet cage
- 84: ratchet cylinder
- 86: cylinder
- 88: anchor
- 90: housing
- 92: inner thread of 82
- 94: outer thread of 80
- 96: teeth
- 98: end of 84
- 100: end of 82
- 102: recess
- 104: passage
- 106: end
- 108: outer surface
- 110: finger
- 112: channel
- 114: end
- 116: cone
- 118: end
- 120: cam
- 122: abutment
- 124: resetting mechanism
- 126: cage spring
- 128: indicator drum
- 130: rear body
- 132: inner cylinder
- 134: rotary member
- 136: rotary slide spring
- 138: rotary slide
- 140: main body
- 142: cartridge holder
- 144: cartridge
- 146: cannula attachment
- 148: coupling between 130 and 82
- 150: projection
- 152: recess
- 153: button-cover
- 154: clamping mechanism
- 156: upper cage element
- 158: lower cage element
- 160: a fixed cage element
- 162: spring
- 164: rotatable cage element
- 166: lever
- 168: guide cam
- 170: guide slot
- 172: abutment surface
- 174: elongate slot
- 176: push button support
- 178: piston guide
- 180: window

- A: longitudinal axis
- M: material
- R: radial direction

## Claims

1. Dispenser (10) for dispensing 1K materials (M), in particular 1K dental materials (M), the dispenser (10) comprising:
a housing (12),
one or more nozzles (14) for dispensing one or more respective 1K materials (M), the one or more nozzles (14) being attached to the housing (12),
one or more reservoirs (16) for storing the respective 1K material (M), the one or more reservoirs (16) being arranged within the housing (12) of the dispenser (10),
one or more material driving assemblies (18) configured to act on a respective one of the one or more reservoirs (16) to drive the respective 1K material (M) through a respective one of the one or more nozzles (14), with the one or more material driving assemblies (18) at least partly being arranged within the housing (12) and the one or more material driving assemblies (18) each comprising a piston rod (80),
the dispenser further comprising a resetting mechanism, wherein the resetting mechanism is configured to rotate relative to the housing when no dispensing unit is attached to the housing and to thereby move the piston rod (80) in a distal direction back into the housing (12).

2. The dispenser (10) according to claim 1,
wherein the nozzle (14) is one of a nozzle (14) repeatedly detachable to and from the dispenser (10), e.g. via first and second connections means (28, 30) and a nozzle fixed to the dispenser

3. The dispenser (10) according to one of the claims 1 to 2,
wherein the one or more material driving assemblies (18) comprise one or more members selected from the group of members comprising a plunger (20), a driver (36), e.g. a mechanical drive, an electric drive, a pressurized gas drive, one or more pumps (38), one or more valves (40), one or more piezo elements and combinations of the foregoing.

4. The dispenser (10) according to one of claims 1 to 3,
further comprising a control unit (46) arranged within the housing (12), the control unit (12) being configured to initiate an activation of the one or more material driving assemblies (18) to act on one of the one or more reservoirs (16) to dispense the respective 1K material (M) via said one of the one or more nozzles (14).

5. The dispenser (10) according to one of claims 1 to 4,
further comprising an activator (50), such as a button (52) or lever (54), the activator (50) being associated with a respective one of the one or more nozzles (14) for activating one of the one or more material driving assemblies (18) to dispense 1K material (M) via said one of the one or more nozzles (14).

6. The dispenser (10) according to one of claims 1 to 5,
wherein each reservoir (16) is arranged in a chamber (58) of the dispenser (10), optionally
wherein each chamber (58) is arranged within a cover (60) of the dispenser, optionally wherein the dispenser (10) further comprises a passage (68) connecting the respective one of the one or more nozzles (14) with a respective chamber (58).

7. The dispenser (10) according to one of claims 1 to 6,
wherein the dispenser (10) is a pen-type dispenser, and preferably is a reusable pen-type dispenser.

8. The dispenser (10) according to one of claims 1 to 7,
wherein the resetting mechanism is configured to be pushed axially in the distal direction along the longitudinal axis A by the cartridge holder when the cartridge holder is being mounted to the housing and to thereby become rotationally locked with respect to the housing.

9. The dispenser (10) according to one of claims 3 to 8, wherein the plunger (20) is moveably arranged in the cartridge respectively in the cartridge holder (142).

10. The dispenser (10) according to one of claims 5 to 9, wherein the activator (50) is a button of hinge type that is arranged at a main body (14) and/or between a push button support (176) and a main body (140).

11. The dispenser (10) according to one of claims 1 to 10, further comprising a remaining filling level indicator.

12. The dispenser (10) according to claim 11, wherein the remaining filling level indicator is a indicator drum (128) visible through a window (80).

13. The dispenser (10) according to claim 12, wherein the window (80) is present in a rear body part (136).

## Patentansprüche

1. Spender (10) zum Ausgeben von 1K-Materialien (M), insbesondere 1K-Dentalmaterialien (M), wobei der Spender (10) Folgendes umfasst:
ein Gehäuse (12),
eine oder mehrere Düsen (14) zum Ausgeben eines oder mehrerer jeweiliger 1K-Materialien (M), wobei die eine oder die mehreren Düsen (14) an dem Gehäuse (12) angebracht sind,
ein oder mehrere Reservoirs (16) zum Speichern des jeweiligen 1K-Materials (M), wobei das eine oder die mehreren Reservoirs (16) innerhalb des Gehäuses (12) des Spenders (10) angeordnet sind,
eine oder mehrere Materialantriebsanordnungen (18), die konfiguriert sind, um auf ein jeweiliges des einen oder der mehreren Reservoirs (16) einzuwirken, um das jeweilige 1K-Material (M) durch eine jeweilige der einen oder der mehreren Düsen (14) zu treiben, wobei die eine oder die mehreren Materialantriebsanordnungen (18) zumindest teilweise innerhalb des Gehäuses (12) angeordnet sind und die eine oder die mehreren Materialantriebsanordnungen (18) jeweils eine Kolbenstange (80) umfassen,
wobei der Spender ferner einen Rückstellmechanismus umfasst, wobei der Rückstellmechanismus konfiguriert ist, um sich relativ zu dem Gehäuse zu drehen, wenn keine Ausgabeeinheit an dem Gehäuse angebracht ist, und um dadurch die Kolbenstange (80) in einer distalen Richtung zurück in das Gehäuse (12) zu bewegen.

2. Spender (10) nach Anspruch 1,
wobei die Düse (14) eine von einer Düse (14), die wiederholt an und von dem Spender (10) lösbar ist, z. B. über ein erstes und zweites Verbindungsmittel (28, 30) und eine an dem Spender befestigte Düse ist.

3. Spender (10) nach einem der Ansprüche 1 bis 2,
wobei die eine oder mehreren Materialantriebsanordnungen (18) ein oder mehrere Elemente umfassen, die aus der Gruppe von Elementen ausgewählt sind, die einen Kolben (20), einen Treiber (36), z. B. einen mechanischen Antrieb, einen elektrischen Antrieb, einen Druckgasantrieb, eine oder mehrere Pumpen (38), ein oder mehrere Ventile (40), ein oder mehrere Piezoelemente und Kombinationen der Vorstehenden umfasst.

4. Spender (10) nach einem der Ansprüche 1 bis 3,
ferner umfassend eine Steuereinheit (46), die innerhalb des Gehäuses (12) angeordnet ist, wobei die Steuereinheit (12) konfiguriert ist, um eine Aktivierung der einen oder der mehreren Materialantriebsanordnungen (18) zu initiieren, um auf eines des einen oder der mehreren Reservoirs (16) einzuwirken, um das jeweilige 1K-Material (M) über die eine der einen oder der mehreren Düsen (14) auszugeben.

5. Spender (10) nach einem der Ansprüche 1 bis 4,
ferner umfassend einen Aktivator (50), wie etwa einen Knopf (52) oder Hebel (54), wobei der Aktivator (50) einer jeweiligen der einen oder der mehreren Düsen (14) zugeordnet ist, um eine der einen oder der mehreren Materialantriebsanordnungen (18) zu aktivieren, um 1K-Material (M) über die eine der einen oder der mehreren Düsen (14) auszugeben.

6. Spender (10) nach einem der Ansprüche 1 bis 5,
wobei jedes Reservoir (16) in einer Kammer (58) des Spenders (10) angeordnet ist, wobei optional jede Kammer (58) innerhalb einer Abdeckung (60) des Spenders angeordnet ist, wobei optional der Spender (10) ferner einen Durchgang (68) umfasst, der die jeweilige der einen oder der mehreren Düsen (14) mit einer jeweiligen Kammer (58) verbindet.

7. Spender (10) nach einem der Ansprüche 1 bis 6,
wobei der Spender (10) ein stiftartiger Spender ist und vorzugsweise ein wiederverwendbarer stiftartiger Spender ist.

8. Spender (10) nach einem der Ansprüche 1 bis 7,
wobei der Rückstellmechanismus konfiguriert ist, um axial in der distalen Richtung entlang der Längsachse A durch den Kartuschenhalter geschoben zu werden, wenn der Kartuschenhalter an dem Gehäuse montiert ist, und um dadurch in Bezug auf das Gehäuse rotatorisch verriegelt zu werden.

9. Spender (10) nach einem der Ansprüche 3 bis 8, wobei der Kolben (20) beweglich in der Kartusche bzw. in dem Kartuschenhalter (142) angeordnet ist.

10. Spender (10) nach einem der Ansprüche 5 bis 9, wobei der Aktivator (50) ein Knopf vom Scharniertyp ist, der an einem Hauptkörper (14) und/oder zwischen einer Druckknopfhalterung (176) und einem Hauptkörper (140) angeordnet ist.

11. Spender (10) nach einem der Ansprüche 1 bis 10, ferner umfassend eine Restfüllstandsanzeige.

12. Spender (10) nach Anspruch 11, wobei die Restfüllstandsanzeige eine Anzeigetrommel (128) ist, die durch ein Fenster (80) sichtbar ist.

13. Spender (10) nach Anspruch 12, wobei das Fenster (80) in einem hinteren Körperteil (136) vorhanden ist.

## Revendications

1. Distributeur (10) destiné à distribuer des matériaux 1K (M), en particulier des matériaux dentaires 1K (M), le distributeur (10) comprenant :
un boîtier (12),
une ou plusieurs buses (14) destinées à distribuer un ou plusieurs matériaux 1K respectifs (M), lesdites une ou plusieurs buses (14) étant attachées au boîtier (12),
un ou plusieurs réservoirs (16) destinés à stocker le matériau 1K respectif (M), lesdits un ou plusieurs réservoirs (16) étant agencés à l'intérieur du boîtier (12) du distributeur (10),
un ou plusieurs groupes d'entraînement de matériau (18) configurés pour agir sur un réservoir respectif desdits un ou plusieurs réservoirs (16) afin d'entraîner le matériau 1K respectif (M) à travers une buse respective desdites une ou plusieurs buses (14), lesdits un ou plusieurs groupes d'entraînement de matériau (18) étant en partie agencés à l'intérieur du boîtier (12) et lesdits un ou plusieurs groupes d'entraînement de matériau (18) comprenant chacun une tige de piston (80),
le distributeur comprenant en outre un mécanisme de réinitialisation, le mécanisme de réinitialisation étant configuré pour entrer en rotation relativement au boîtier quand aucune unité de distribution n'est attachée au boîtier et pour ainsi déplacer la tige de piston (80) dans une direction distale vers l'arrière jusque dans le boîtier (12).

2. Distributeur (10) selon la revendication 1,
dans lequel la buse (14) est l'une d'une buse (14) pouvant être attachée au distributeur (10) et détachée de celui-ci à plusieurs reprises, par exemple via un premier et un second moyen de connexion (28, 30), et d'une buse attachée de manière fixe au distributeur.

3. Distributeur (10) selon l'une des revendications 1 à 2,
dans lequel lesdits un ou plusieurs groupes d'entraînement de matériau (18) comprennent un ou plusieurs éléments sélectionnés parmi le groupe d'éléments comprenant un plongeur (20), un moyen d'entraînement (36), par exemple un entraînement mécanique, un entraînement électrique, un entraînement à gaz pressurisé, une ou plusieurs pompes (38), une ou plusieurs vannes (40), un ou plusieurs éléments piézoélectriques, et des combinaisons de ceux-ci.

4. Distributeur (10) selon l'une des revendications 1 à 3,
comprenant en outre une unité de commande (46) agencée à l'intérieur du boîtier (12), l'unité de commande (12) étant configurée pour lancer une activation desdits un ou plusieurs groupes d'entraînement de matériau (18) pour agir sur l'un desdits un ou plusieurs réservoirs (16) pour distribuer le matériau 1K respectif (M) via ladite une desdites une ou plusieurs buses (14).

5. Distributeur (10) selon l'une des revendications 1 à 4,
comprenant en outre un activateur (50), tel qu'un bouton (52) ou un levier (54), l'activateur (50) étant associé à une buse respective desdites une ou plusieurs buses (14) pour activer l'un desdits un ou plusieurs groupes d'entraînement de matériau (18) pour distribuer un matériau 1K (M) via ladite une desdites une ou plusieurs buses (14).

6. Distributeur (10) selon l'une des revendications 1 à 5,
dans lequel chaque réservoir (16) est agencé dans une chambre (58) du distributeur (10), en option dans lequel chaque chambre (58) est agencée à l'intérieur d'une couverture (60) du distributeur, en option dans lequel le distributeur (10) comprend en outre un passage (68) connectant la buse respective desdites une ou plusieurs buses (14) à une chambre respective (58).

7. Distributeur (10) selon l'une des revendications 1 à 6,
dans lequel le distributeur (10) est un distributeur du type stylo, et de préférence est un distributeur du type stylo réutilisable.

8. Distributeur (10) selon l'une des revendications 1 à 7,
dans lequel le mécanisme de réinitialisation est configuré pour être poussé axialement dans la direction axiale long de l'axe longitudinal A par le porte-cartouche quand le porte-cartouche est monté sur le boîtier, et pour ainsi devenir bloqué en rotation par rapport au boîtier.

9. Distributeur (10) selon l'une des revendications 3 à 8, dans lequel le plongeur (20) est agencé de manière mobile dans la cartouche respectivement dans le porte-cartouche (142).

10. Distributeur (10) selon l'une des revendications 5 à 9, dans lequel l'activateur (50) est un bouton du type à charnière qui est agencé au niveau d'un corps principal (14) et/ou entre un support de bouton-poussoir (176) et un corps principal (140).

11. Distributeur (10) selon l'une des revendications 1 à 10, comprenant en outre un indicateur de niveau de remplissage restant.

12. Distributeur (10) selon la revendication 11, dans lequel l'indicateur de niveau de remplissage restant est un tambour indicateur (128) visible à travers une fenêtre (80).

13. Distributeur (10) selon la revendication 12, dans lequel la fenêtre (80) est présente dans une partie de corps arrière (136).
